# EUROPEAN PATENT APPLICATION

(11) **EP 4 827 212 A1**
(43) Date of publication of application: **21.10.2026**
(21) Application number: 24910801.0
(22) Date of filing: 16.12.2024
(51) Int. Cl.: H04W 72/231

(54) **COMMUNICATION METHOD AND APPARATUS**

(30) Priority: 26.12.2023 CN 202311816698
(71) Applicant: Huawei Technologies Co., Ltd., Shenzhen, Guangdong 518129 (CN)
(72) Inventor: ZHAI, Bangzhao, Shenzhen, Guangdong 518129 (CN); LI, Xinxian, Shenzhen, Guangdong 518129 (CN); DING, Mengying, Shenzhen, Guangdong 518129 (CN); PENG, Jinlin, Shenzhen, Guangdong 518129 (CN)
(74) Representative: Huawei European IPR
(86) International application number: PCT/CN2024/139521
(87) International publication number: WO 2025/139870

(57) **Abstract**

A communication method and apparatus. In the method, a terminal device receives configuration information, the configuration information being used to configure a resource block bundling size corresponding to each second frequency domain resource among a plurality of second frequency domain resources of a first frequency domain resource, resource blocks between different second frequency domain resources among the plurality of second frequency domain resources being non-contiguous and the resource blocks of each second frequency domain resource being contiguous; the terminal device determines, based on the resource block bundling size corresponding to each second frequency domain resource, a resource group corresponding to each second frequency domain resource. The method can reduce power consumption of the terminal device.

## Description

This application claims priority to Chinese Patent Application No. 202311816698.X, filed with the China National Intellectual Property Administration on December 26, 2023, and entitled "A COMMUNICATION METHOD AND APPARATUS," the entire content of which is incorporated herein by reference.

### Technical Field

The present application relates to the field of communication technologies, and in particular, to a communication method and apparatus.

### Background

In a communication system, when a network device and a terminal device use a bandwidth part (BWP) to perform physical downlink shared channel (PDSCH) transmission, the terminal device can assume that several contiguous physical resource blocks (PRBs) use the same precoding matrix, where the several contiguous PRBs are referred to as a physical resource block group (PRG), and this technique is referred to as physical resource block bundling (PRB bundling).

In the future, it is possible that multiple discrete frequency domain resources (e.g., multiple carriers) will be bundled and integrated into an integrated single cell. In this case, how the terminal device determines a resource group (e.g., a PRG) remains an issue to be studied.

### Summary

Embodiments of the present application provide a communication method and apparatus, which can enable a terminal device to determine a resource group in a scenario where multiple discrete frequency domain resources are bundled and integrated into a single cell, and can reduce power consumption of the terminal device.

In a first aspect, embodiments of the present application provide a communication method. The method can be performed by a terminal device. The terminal device herein can refer to either the terminal device itself or to a processor, module, chip, or chip system within the terminal device that implements the method. In the method, the terminal device receives configuration information, where the configuration information is used to configure a resource block bundling size corresponding to each second frequency domain resource among multiple second frequency domain resources of a first frequency domain resource, resource blocks among different second frequency domain resources of the multiple second frequency domain resources are non-contiguous and the resource blocks of each second frequency domain resource are contiguous; and the terminal device determines, based on the resource block bundling size corresponding to each second frequency domain resource, a resource group corresponding to each second frequency domain resource.

It can be seen that, in the embodiments of the present application, the first frequency domain resource includes multiple second frequency domain resources, resource blocks among different second frequency domain resources of the multiple second frequency domain resources are non-contiguous and the resource blocks of each second frequency domain resource are contiguous, and thus the multiple discrete second frequency domain resources are bundled and integrated into a single cell corresponding to the first frequency domain resource. In this scenario, the terminal device can determine, based on the configured resource block bundling size corresponding to each second frequency domain resource, a resource group corresponding to each second frequency domain resource, and further the terminal device can perform resource block bundling on each second frequency domain resource, which can reduce power consumption of the terminal device.

In an optional implementation, the first frequency domain resource is a bandwidth part (BWP), the second frequency domain resource is a carrier, the resource block is a physical resource block (PRB), the resource block bundling size is a PRB bundling size, and the resource group is a physical resource block group (PRG). It can be seen that multiple discrete carriers can be bundled and integrated into a single cell corresponding to a BWP.

In an optional implementation, resource block bundling sizes corresponding to the respective second frequency domain resources are the same, the resource group corresponding to each second frequency domain resource includes M resource blocks, the M resource blocks are resource blocks occupied by the second frequency domain resource, and M is a positive integer. Alternatively, it can be understood that: when the resource block bundling sizes corresponding to the respective second frequency domain resources are the same, the size of the resource group corresponding to each second frequency domain resource is M.

It can be seen that, when the resource block bundling sizes corresponding to the respective second frequency domain resources are the same, the terminal device can determine that the resource group corresponding to each second frequency domain resource includes the M resource blocks occupied by the second frequency domain resource itself.

Optionally, when the resource block bundling sizes corresponding to the respective second frequency domain resources are the same and are all configured as wideband, the resource group corresponding to each second frequency domain resource includes M resource blocks. Alternatively, it can be understood that: when the resource block bundling sizes corresponding to the respective second frequency domain resources are the same and are all configured as wideband, the size of the resource group corresponding to each second frequency domain resource is M.

In another optional implementation, resource block bundling sizes corresponding to the respective second frequency domain resources are the same, and for the n-th second frequency domain resource among the multiple second frequency domain resources: the size of the first resource group of the n-th second frequency domain resource is *P'* - *N^{start,n} modP*' ; if (*N^{start,n}* + *N^{size,n}*) *mod P'* ≠ 0, the size of the last resource group of the n-th second frequency domain resource is (*N^{start,n}* + *N^{size,n}*) *mod P'* ; if (*N^{start,n}* + *N^{size,n}*) *mod P'* =0, the size of the last resource group of the n-th second frequency domain resource is *P'*. Wherein, *N^{start,n}* is the starting index of the resource blocks in the n-th second frequency domain resource, *N^{size,n}* is the number of resource blocks included in the n-th second frequency domain resource, *P'* is the resource block bundling size corresponding to the multiple second frequency domain resources, *mod* is a modulo function, and *P'* and n are positive integers.

It can be seen that, when the resource block bundling sizes corresponding to the respective second frequency domain resources are the same, for the n-th second frequency domain resource among the multiple second frequency domain resources, the terminal device can determine, based on the resource block bundling size corresponding to the multiple second frequency domain resources, the starting index of the resource blocks in the n-th second frequency domain resource, and the number of resource blocks included in the n-th second frequency domain resource, the sizes of the first resource group and the last resource group corresponding to the n-th second frequency domain resource. In addition, the sizes of other resource groups corresponding to the n-th second frequency domain resource are all *P'*.

In an optional implementation, *P'* is determined based on one of: a sum of bandwidths of the multiple second frequency domain resources, a maximum frequency domain interval of the multiple second frequency domain resources, or a minimum frequency domain interval of the multiple second frequency domain resources.

In yet another optional implementation, resource block bundling sizes corresponding to the respective second frequency domain resources are not the same, the resource group corresponding to the n-th second frequency domain resource among the multiple second frequency domain resources includes M resource blocks, the M resource blocks are resource blocks occupied by the second frequency domain resource, and M and n are positive integers. Alternatively, it can be understood that: when the resource block bundling sizes corresponding to the respective second frequency domain resources are not the same, the size of the resource group corresponding to the n-th second frequency domain resource among the multiple second frequency domain resources is M.

It can be seen that, when the resource block bundling sizes corresponding to the respective second frequency domain resources are not the same, for the n-th second frequency domain resource among the multiple second frequency domain resources, the terminal device can determine that the resource group corresponding to the n-th second frequency domain resource includes the M resource blocks occupied by the n-th second frequency domain resource itself.

Optionally, when the resource block bundling sizes corresponding to the respective second frequency domain resources are not the same, and the resource block bundling size corresponding to the n-th second frequency domain resource among the multiple second frequency domain resources is configured as wideband, the resource group corresponding to the n-th second frequency domain resource includes the M resource blocks occupied by the n-th second frequency domain resource itself.

In yet another optional implementation, resource block bundling sizes corresponding to the respective second frequency domain resources are not the same, and for the n-th second frequency domain resource among the multiple second frequency domain resources: the size of the first resource group of the n-th second frequency domain resource is ${P}_{n}^{′} - {N}^{start , n} {modP}_{n}^{′}$; if $\left({N}^{start , n}+{N}^{size , n}\right) {modP}_{n}^{′} \neq 0$ , the size of the last resource group of the n-th second frequency domain resource is $\left({N}^{start , n}+{N}^{size , n}\right) {modP}_{n}^{′}$; if $\left({N}^{start , n}+{N}^{size , n}\right) {modP}_{n}^{′} = 0$, the size of the last resource group of the n-th second frequency domain resource is ${P}_{n}^{′}$. Wherein, *N^{start,n}* is the starting index of the resource blocks in the n-th second frequency domain resource, *N^{size,n}* is the number of resource blocks included in the n-th second frequency domain resource, ${P}_{n}^{′}$ is the resource block bundling size corresponding to the n-th second frequency domain resource, *mod* is a modulo function, and ${P}_{n}^{′}$ and n are positive integers.

It can be seen that, when the resource block bundling sizes corresponding to the respective second frequency domain resources are not the same, for the n-th second frequency domain resource among the multiple second frequency domain resources, the terminal device can determine, based on the resource block bundling size corresponding to the n-th second frequency domain resource, the starting index of the resource blocks in the n-th second frequency domain resource, and the number of resource blocks included in the n-th second frequency domain resource, the sizes of the first resource group and the last resource group corresponding to the n-th second frequency domain resource. In addition, the sizes of other resource groups corresponding to the n-th second frequency domain resource are all ${P}_{n}^{′}$.

In an optional implementation, ${P}_{n}^{′}$ is determined based on the bandwidth or the frequency domain interval of the n-th second frequency domain resource.

In an optional implementation, precoding matrices used between different resource groups are not the same. It can be seen that the terminal device can consider that when the network device uses frequency domain resources in different resource groups for data transmission, the precoding matrices used are not the same.

In a second aspect, embodiments of the present application provide a communication method. The method can be performed by a network device. The network device herein can refer to either the network device itself or to a processor, module, chip, or chip system within the network device that implements the method. In the method, the network device sends first configuration information, where the configuration information is used to configure a resource block bundling size corresponding to each second frequency domain resource among multiple second frequency domain resources of a first frequency domain resource, resource blocks among different second frequency domain resources of the second frequency domain resources are non-contiguous and the resource blocks of each second frequency domain resource are contiguous, and the resource block bundling size corresponding to each second frequency domain resource is used to determine a resource group corresponding to the second frequency domain resource.

It can be seen that, in the embodiments of the present application, the first frequency domain resource includes multiple second frequency domain resources, resource blocks among different second frequency domain resources of the multiple second frequency domain resources are non-contiguous and the resource blocks of each second frequency domain resource are contiguous, and thus the multiple discrete second frequency domain resources are bundled and integrated into a single cell corresponding to the first frequency domain resource. In this scenario, the network device configures the resource block bundling size corresponding to each second frequency domain resource for the terminal device, thereby facilitating the terminal device in determining, based on the resource block bundling size corresponding to each second frequency domain resource, the resource group corresponding to each second frequency domain resource, so that the terminal device can perform resource block bundling, which can reduce power consumption of the terminal device.

In an optional implementation, the first frequency domain resource is a bandwidth part (BWP), the second frequency domain resource is a carrier, the resource block is a physical resource block (PRB), the resource block bundling size is a PRB bundling size, and the resource group is a physical resource block group (PRG). It can be seen that multiple discrete carriers are bundled and integrated into a single cell corresponding to a BWP.

In an optional implementation, resource block bundling sizes corresponding to the respective second frequency domain resources are the same, the resource group corresponding to each second frequency domain resource includes M resource blocks, the M resource blocks are resource blocks occupied by the second frequency domain resource, and M is a positive integer. Alternatively, it can be understood that: the resource block bundling sizes corresponding to the respective second frequency domain resources are the same, and the size of the resource group corresponding to each second frequency domain resource is M.

It can be seen that, when the resource block bundling sizes corresponding to the respective second frequency domain resources are the same, the resource group corresponding to each second frequency domain resource can include the M resource blocks occupied by the second frequency domain resource itself.

Optionally, when the resource block bundling sizes corresponding to the respective second frequency domain resources are the same and are all configured as wideband, the resource group corresponding to each second frequency domain resource includes M resource blocks.

In another optional implementation, resource block bundling sizes corresponding to the respective second frequency domain resources are the same, and for the n-th second frequency domain resource among the multiple second frequency domain resources: the size of the first resource group of the n-th second frequency domain resource is *P'* - *N^{start,n} modP'* ; if (*N^{start,n}* + *N^{size,n}*) *mod P'* ≠ 0, the size of the last resource group of the n-th second frequency domain resource is (*N^{start,n}* + *N^{size,n}*) *mod P'* ; if (*N^{start,n}* + *N^{size,n}*) *mod P'* = 0, the size of the last resource group of the n-th second frequency domain resource is *P'*. Wherein, *N^{start,n}* is the starting index of the resource blocks in the n-th second frequency domain resource, *N^{size,n}* is the number of resource blocks included in the n-th second frequency domain resource, *P'* is the resource block bundling size corresponding to the multiple second frequency domain resources, *mod* is a modulo function, and *P'* and n are positive integers.

It can be seen that, when the resource block bundling sizes corresponding to the respective second frequency domain resources are the same, for the n-th second frequency domain resource among the multiple second frequency domain resources, the sizes of the first resource group and the last resource group corresponding to the n-th second frequency domain resource can be determined based on the resource block bundling size corresponding to the multiple second frequency domain resources, the starting index of the resource blocks in the n-th second frequency domain resource, and the number of resource blocks included in the n-th second frequency domain resource. In addition, the size of other resource groups corresponding to the n-th second frequency domain resource is *P'*.

In yet another optional implementation, *P*' is determined based on one of: a sum of bandwidths of the multiple second frequency domain resources, a maximum frequency domain interval of the multiple second frequency domain resources, or a minimum frequency domain interval of the multiple second frequency domain resources.

In yet another optional implementation, resource block bundling sizes corresponding to the respective second frequency domain resources are not the same, the resource group corresponding to the n-th second frequency domain resource includes M resource blocks, the M resource blocks are resource blocks occupied by the second frequency domain resource, and M and n are positive integers. Alternatively, it can be understood that: the resource block bundling sizes corresponding to the respective second frequency domain resources are not the same, and the size of the resource group corresponding to the n-th second frequency domain resource is M.

It can be seen that, when the resource block bundling sizes corresponding to the respective second frequency domain resources are not the same, the resource group corresponding to the n-th second frequency domain resource among the multiple second frequency domain resources can include the M resource blocks occupied by the n-th second frequency domain resource itself.

Optionally, when the resource block bundling sizes corresponding to the respective second frequency domain resources are not the same, and the resource block bundling size corresponding to the n-th second frequency domain resource among the multiple second frequency domain resources is configured as wideband, the resource group corresponding to the n-th second frequency domain resource includes M resource blocks.

In an optional implementation, resource block bundling sizes corresponding to the respective second frequency domain resources are not the same, and for the n-th second frequency domain resource among the multiple second frequency domain resources: the size of the first resource group of the n-th second frequency domain resource is ${P}_{n}^{′} - {N}^{start , n} {modP}_{n}^{′}$; if $\left({N}^{start , n}+\right.$+ $\left.{N}^{size , n}\right) {modP}_{n}^{′} \neq 0$, the size of the last resource group of the n-th second frequency domain resource is $\left({N}^{start , n}+{N}^{size , n}\right) {modP}_{n}^{′}$; if $\left({N}^{start , n}+{N}^{size , n}\right) {modP}_{n}^{′} = 0$, the size of the last resource group of the n-th second frequency domain resource is ${P}_{n}^{′}$. Wherein, *N^{start,n}* is the starting index of the resource blocks in the n-th second frequency domain resource, *N^{size,n}* is the number of resource blocks included in the n-th second frequency domain resource, ${P}_{n}^{′}$ is the resource block bundling size corresponding to the n-th second frequency domain resource, *mod* is a modulo function, and ${P}_{n}^{′}$ and n are positive integers.

It can be seen that, when the resource block bundling sizes corresponding to the respective second frequency domain resources are not the same, for the n-th second frequency domain resource among the multiple second frequency domain resources, the sizes of the first resource group and the last resource group corresponding to the n-th second frequency domain resource can be determined based on the resource block bundling size corresponding to the n-th second frequency domain resource, the starting index of the resource blocks in the n-th second frequency domain resource, and the number of resource blocks included in the n-th second frequency domain resource. In addition, the sizes of other resource groups corresponding to the n-th second frequency domain resource are all ${P}_{n}^{′}$.

In an optional implementation, ${P}_{n}^{′}$ is determined based on the bandwidth or the frequency domain interval of the n-th second frequency domain resource.

In an optional implementation, precoding matrices used between different resource groups are not the same. It can be seen that when the network device uses different resource groups for data transmission, it can use different precoding matrices.

In a third aspect, embodiments of the present application further provide a communication apparatus. The communication apparatus has some or all of the functions of the terminal device described in the first aspect above, or some or all of the functions of the network device described in the second aspect above. For example, the functions of the communication apparatus may have functions in some or all of the embodiments of the terminal device described in the first aspect of the embodiments of the present application, or may have the function of independently implementing any one embodiment of the embodiments of the present application. The functions may be implemented by hardware, or may be implemented by hardware executing corresponding software. The hardware or software includes one or more units or modules corresponding to the above functions.

In a possible design, the structure of the communication apparatus may include a processing unit and a communication unit, where the processing unit is configured to support the communication apparatus in executing corresponding functions in the above methods. The communication unit is used to support communication between the communication apparatus and other communication apparatuses. The communication apparatus may further include a storage unit, where the storage unit is used to couple with the processing unit and the communication unit, and stores program instructions and data necessary for the communication apparatus.

In one implementation, the communication apparatus includes: a processing unit and a communication unit, where the apparatus is applied to a terminal device;
the communication unit is used to receive configuration information, where the configuration information is used to configure a resource block bundling size corresponding to each second frequency domain resource among multiple second frequency domain resources of a first frequency domain resource, resource blocks among different second frequency domain resources of the multiple second frequency domain resources are non-contiguous and the resource blocks of each second frequency domain resource are contiguous;
the processing unit is used to determine, based on the resource block bundling size corresponding to each second frequency domain resource, a resource group corresponding to each second frequency domain resource.

In addition, in this aspect, for other optional implementations of the communication apparatus, reference can be made to the relevant content of the first aspect above, and details are not described herein again.

In another implementation, the communication apparatus includes: a processing unit and a communication unit, where the apparatus is applied to a network device, and the processing unit is used to process signals/signaling;
a) the communication unit is used to send first configuration information, where the configuration information is used to configure a resource block bundling size corresponding to each second frequency domain resource among multiple second frequency domain resources of a first frequency domain resource, resource blocks among different second frequency domain resources of the second frequency domain resources are non-contiguous and the resource blocks of each second frequency domain resource are contiguous; and the resource block bundling size corresponding to each second frequency domain resource is used to determine a resource group corresponding to the second frequency domain resource.

In addition, in this aspect, for other optional implementations of the communication apparatus, reference can be made to the relevant content of the second aspect above, and details are not described herein again.

As an example, the communication unit may be a transceiver or a communication interface, the storage unit may be a memory, and the processing unit may be a processor.

In one implementation, the communication apparatus includes: a processor and a transceiver, where the apparatus is applied to a terminal device;
the transceiver is used to receive configuration information, where the configuration information is used to configure a resource block bundling size corresponding to each second frequency domain resource among multiple second frequency domain resources of a first frequency domain resource, resource blocks among different second frequency domain resources of the multiple second frequency domain resources are non-contiguous and the resource blocks of each second frequency domain resource are contiguous;
the processor is used to determine, based on the resource block bundling size corresponding to each second frequency domain resource, a resource group corresponding to each second frequency domain resource.

In addition, in this aspect, for other optional implementations of the communication apparatus, reference can be made to the relevant content of the first aspect above, and details are not described herein again.

In another implementation, the communication apparatus includes: a processor and a transceiver, where the apparatus is applied to a network device, and the processor is used to process signals/signaling;
the transceiver is used to send first configuration information, where the configuration information is used to configure a resource block bundling size corresponding to each second frequency domain resource among multiple second frequency domain resources of a first frequency domain resource, resource blocks among different second frequency domain resources of the second frequency domain resources are non-contiguous and the resource blocks of each second frequency domain resource are contiguous; and the resource block bundling size corresponding to each second frequency domain resource is used to determine a resource group corresponding to the second frequency domain resource.

In addition, in this aspect, for other optional implementations of the communication apparatus, reference can be made to the relevant content of the second aspect above, and details are not described herein again.

In another implementation, the communication apparatus is a chip or a chip system. The processing unit may also be embodied as a processing circuit or a logic circuit; the communication unit may be an input/output interface, an interface circuit, an output circuit, an input circuit, a pin, or a related circuit on the chip or the chip system.

During implementation, the processor can be used to perform, for example but not limited to, baseband-related processing, and the transceiver can be used to perform, for example but not limited to, radio frequency transmission and reception. The above components can be separately disposed on chips independent of each other, or can be at least partially or entirely disposed on the same chip. For example, the processor can be further divided into an analog baseband processor and a digital baseband processor. The analog baseband processor can be integrated with the transceiver on the same chip, and the digital baseband processor can be disposed on an independent chip. With the continuous development of integrated circuit technology, more and more components can be integrated on the same chip. For example, the digital baseband processor can be integrated with various application processors (for example but not limited to, graphics processors, multimedia processors, etc.) on the same chip. Such a chip can be referred to as a system on a chip (SoC). Whether the various components are independently disposed on different chips or integrated on one or more chips often depends on the needs of product design. The embodiments of the present application do not limit the implementation form of the above components.

In a fourth aspect, embodiments of the present application further provide a processor for executing the above various methods. During execution of these methods, the processes of sending the above information and receiving the above information in the above methods can be understood as a process of the processor outputting the above information and a process of the processor receiving the input above information. When outputting the above information, the processor outputs the above information to a transceiver so that the transceiver can transmit the above information. After the above information is output by the processor, other processing may also be required before the above information reaches the transceiver. Similarly, when the processor receives the input above information, the transceiver receives the above information and inputs the above information into the processor. Furthermore, after the transceiver receives the above information, other processing may be required before the above information is input into the processor.

For operations such as sending and receiving involved by the processor, unless otherwise specified, or unless they conflict with actual functions or internal logic in the relevant description, they can all be more generally understood as operations such as processor output and reception, input, etc., rather than sending and receiving operations directly performed by a radio frequency circuit and an antenna.

During implementation, the above processor can be a processor specifically used to execute these methods, or can be a processor that executes these methods by executing computer instructions in a memory, for example, a general-purpose processor. The above memory can be a non-transitory memory, for example, a read only memory (ROM), which can be integrated with the processor on the same chip, or can be separately disposed on different chips. The embodiments of the present application do not limit the type of the memory and the disposition manner of the memory and the processor.

In a fifth aspect, embodiments of the present application further provide a communication system, where the system includes a terminal device and a network device. In another possible design, the system may further include other devices/functional network elements that interact with the terminal device and the network device.

In a sixth aspect, embodiments of the present application provide a computer-readable storage medium for storing instructions, and when the instructions are executed by a computer, the method described in the first aspect or the second aspect is implemented.

In a seventh aspect, embodiments of the present application further provide a computer program product comprising instructions, and when the computer program product is run on a computer, the method described in the first aspect or the second aspect is implemented.

In an eighth aspect, embodiments of the present application provide a chip system, where the chip system includes a processor and an interface, the interface is used to obtain a program or instructions, and the processor is used to invoke the program or instructions to implement or support a terminal device in implementing the functions involved in the first aspect, or to implement or support a network device in implementing the functions involved in the second aspect. For example, determining or processing at least one of the data and information involved in the above methods. In a possible design, the chip system further includes a memory, where the memory is used to store program instructions and data necessary for a terminal. The chip system may be composed of chips, or may include chips and other discrete components.

In a ninth aspect, embodiments of the present application provide a communication apparatus, including a processor for executing a computer program or executable instructions stored in a memory, and when the computer program or executable instructions are executed, the apparatus is caused to execute the method in each possible implementation of the first aspect or the second aspect.

In a possible implementation, the processor and the memory are integrated together;
In another possible implementation, the above memory is located outside the communication apparatus.

For the beneficial effects of the third aspect to the ninth aspect, reference can be made to the beneficial effects of the first aspect or the second aspect, and details are not described herein again.

### Brief Description of Drawings

FIG. 1 is a schematic diagram of a system architecture;
FIG. 2 is a schematic diagram of carrier aggregation;
FIG. 3 is a schematic diagram of management of carrier aggregation;
FIG. 4 is a schematic diagram of integrating multiple discrete carriers into a single cell;
FIG. 5 is a schematic diagram of a bandwidth part (BWP);
FIG. 6 is a schematic diagram of another BWP;
FIG. 7 is a schematic diagram of a communication method provided by an embodiment of the present application;
FIG. 8 is a schematic diagram of a physical resource block (PRB) bundling size provided by an embodiment of the present application;
FIG. 9 is a schematic diagram of another PRB bundling size provided by an embodiment of the present application;
FIG. 10 is a schematic diagram of a physical resource block group (PRG) provided by an embodiment of the present application;
FIG. 11 is a schematic diagram of another PRG provided by an embodiment of the present application;
FIG. 12 is a schematic structural diagram of a communication apparatus provided by an embodiment of the present application;
FIG. 13 is a schematic structural diagram of another communication apparatus provided by an embodiment of the present application.

### DESCRIPTION OF EMBODIMENTS

The technical solutions in the embodiments of the present application are described clearly and completely below with reference to the accompanying drawings in the embodiments of the present application.

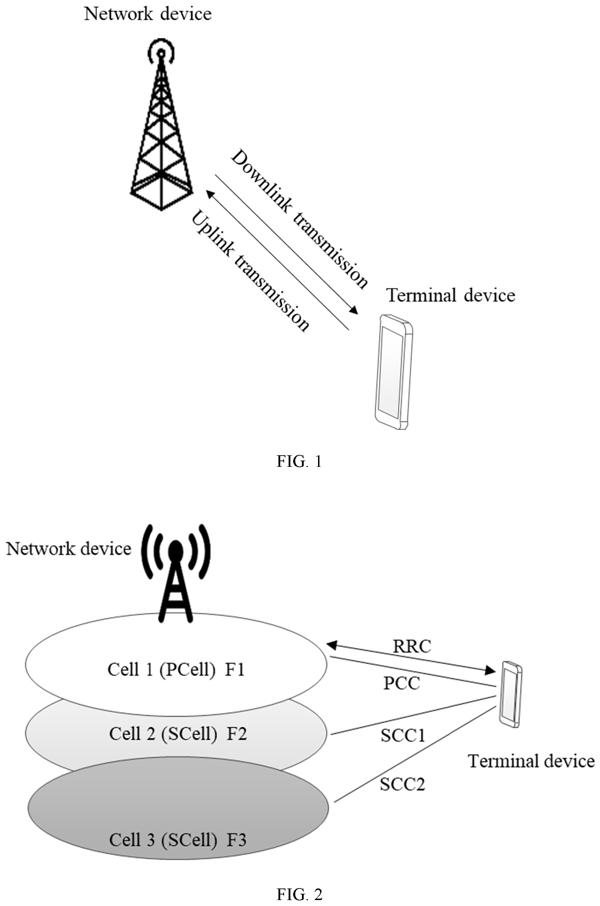

For a better understanding of the embodiments of the present application, the system architecture involved in the embodiments of the present application is first introduced below:
The embodiments of the present application can be applied to wireless communication systems such as a long term evolution (LTE) system, a 5th generation (5G) mobile communication system, a 6th generation (6G) mobile communication system and other systems evolved after 5G, satellite communication, and short-range communication, and the system architecture is as shown in FIG. 1. The wireless communication system may comprise one or more network devices and one or more terminal devices. Wireless communication can be performed between the network device and the terminal device using air interface resources, for example, uplink transmission and downlink transmission can be performed using air interface resources, where the air interface resources may comprise at least one of time domain resources, frequency domain resources, code resources, and spatial resources. The wireless communication system can also perform point-to-point communication, for example, a plurality of terminal devices communicate with each other.

In the embodiments of the present application, a network device is a device having a wireless transceiving function, used for communicating with a terminal device, and can be an evolved Node B (eNB or eNodeB) in LTE, or a base station in a 5G/6G network or a base station in a future evolved public land mobile network (PLMN), a broadband network gateway (BNG), a convergence switch, or a non-3rd generation partnership project (3GPP) access device, etc. Optionally, the network device in the embodiments of the present application may comprise base stations in various forms, for example: a macro base station, a micro base station (also referred to as a small cell), a relay station, an access point, a device implementing base station functions in the future, an access point (AP) in a wireless fidelity (Wi-Fi) system, a transmitting and receiving point (TRP), a transmitting point (TP), a mobile switching center, and a device assuming base station functions in device-to-device (D2D), vehicle-to-everything (V2X), and machine-to-machine (M2M) communication, a device implementing base station functions in communication systems evolved after 5G, an integrated access and backhaul (IAB) node, and may also comprise a centralized unit (CU) and a distributed unit (DU) in a cloud radio access network (C-RAN) system, a network device in a non-terrestrial network (NTN) communication system, i.e., can be deployed on a high-altitude platform or a satellite, and may also be various types of devices constituting an access node, such as an active antenna unit (AAU), a baseband unit (BBU), etc., and the embodiments of the present application do not make specific limitations on this.

The network device can perform communication and interaction with a core network device to provide communication services to the terminal device. The core network device is, for example, a device in a 5G network core network (CN). The core network, as a bearer network, provides an interface to a data network, and provides communication connection, authentication, management, policy control, and bearer completion for data services to the terminal.

In the embodiments of the present application, the apparatus for implementing the functions of the network device can be the network device; or can be an apparatus capable of supporting the network device in implementing the functions, for example, a chip system, and the apparatus can be installed in the network device. In the embodiments of the present application, the chip system can consist of chips, or can comprise chips and other discrete components. In the embodiments of the present application, the solutions provided by the embodiments of the present application are described by taking the apparatus for implementing the functions of the network device being the network device as an example.

In the embodiments of the present application, the terminal device may comprise various handheld devices, vehicle-mounted devices, wearable devices, computing devices, or other processing devices connected to a wireless modem that have a wireless communication function. The terminal device may also be referred to as a terminal. The terminal device may also refer to user equipment (UE), an access terminal, a subscriber unit, a user agent, a cellular phone, a smart phone, a wireless data card, a personal digital assistant (PDA) computer, a tablet computer, a wireless modem, a handset, a laptop computer, a point of sale (POS) machine, customer-premises equipment (CPE), a machine type communication (MTC) terminal, communication equipment mounted on a high-altitude aircraft, a wearable device, an unmanned aerial vehicle, a robot, a terminal in D2D, a terminal in V2X, a virtual reality (VR) terminal device, an augmented reality (AR) terminal device, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, or a terminal device in a future communication network, etc., and the present application makes no limitation.

In the embodiments of the present application, the apparatus for implementing the functions of the terminal device can be the terminal device; or can be an apparatus capable of supporting the terminal device in implementing the functions, for example, a chip system, and the apparatus can be installed in the terminal device. In the embodiments of the present application, the solutions provided by the embodiments of the present application are described by taking the apparatus for implementing the functions of the terminal device being the terminal device as an example.

The embodiments of the present application can be applied to wireless communication between communication devices. The wireless communication between communication devices may comprise: wireless communication between a network device and a terminal device, wireless communication between network devices, and wireless communication between terminal devices. Herein, in the embodiments of the present application, "wireless communication" may also be referred to simply as "communication", and "communication" may also be described as "data transmission", "information transmission", or "transmission", etc.

The embodiments disclosed in the present application will present various aspects, embodiments, or features of the present application around a system comprising a plurality of devices, components, modules, etc. It should be understood and appreciated that each system may comprise additional devices, components, modules, etc., and/or may not comprise all of the devices, components, modules, etc. discussed in conjunction with the accompanying drawings. In addition, combinations of these solutions may also be used.

Relevant concepts involved in the embodiments of the present application are introduced below:

### 1. Carrier aggregation (CA).

CA is a technology that solves the problem of limited bandwidth of a single carrier, and it serves a terminal device by aggregating two or more component carriers (CCs) together to support a larger transmission bandwidth. In carrier aggregation, there can be a plurality of cells serving one terminal device, that is to say, one terminal device has a plurality of serving cells, comprising one primary cell (PCell) and one or more secondary cells (SCells). FIG. 2 is a schematic diagram of carrier aggregation. As shown in FIG. 2, the cells serving the terminal device comprise a PCell (Cell 1) and two SCells (Cell 2 and Cell 3), and the center frequencies of Cell 1, Cell 2, and Cell 3 are F1, F2, and F3, respectively.

Herein, the PCell is a cell on which the terminal device performs initial connection establishment, or a cell on which radio resource control (RRC) connection re-establishment is performed, or a primary cell designated during a handover process. The PCell is responsible for RRC communication with the terminal device. The component carrier corresponding to the PCell is called a primary component carrier (PCC), for example, the component carrier corresponding to Cell 1 in FIG. 2 is the PCC.

The SCell is added when the terminal device performs RRC reconfiguration, and is used for providing additional radio resources. There is no RRC communication between the SCell and the terminal device. The component carrier corresponding to the SCell is called a secondary component carrier (SCC), for example, the component carriers corresponding to Cell 2 and Cell 3 in FIG. 2 are SCC1 and SCC2, respectively.

### 2. Management of carrier aggregation and bundled integration of multiple discrete carriers.

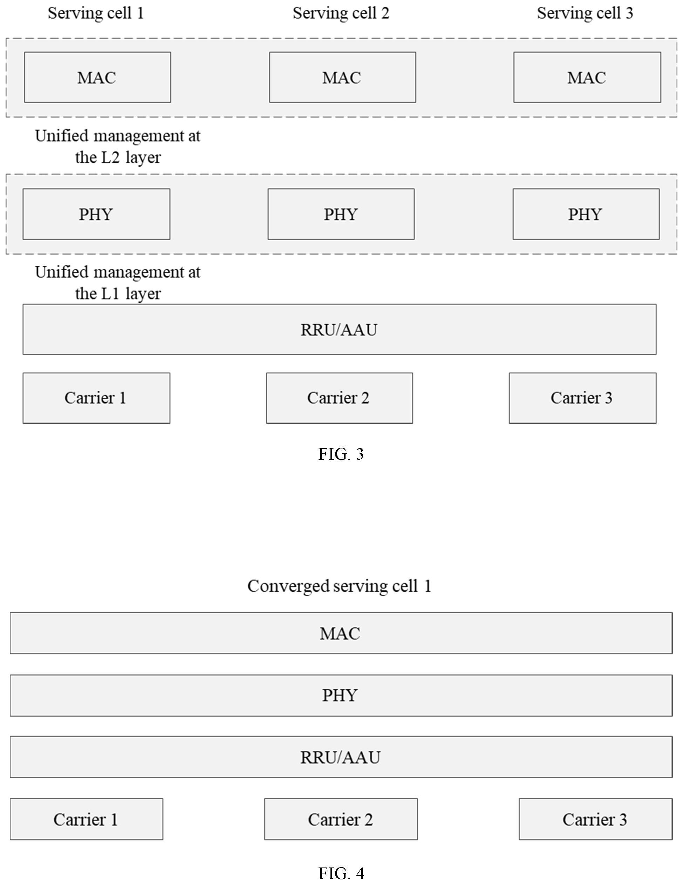

Please refer to FIG. 3, which is a schematic diagram of management of carrier aggregation. As shown in FIG. 3, in this carrier aggregation, each serving cell corresponds to an independent medium access control (MAC) layer and physical layer (PHY). In addition, to improve the spectrum utilization efficiency of a plurality of carriers, unified management of a plurality of carriers can be performed at the L1/L2 layer to reduce latency and save signaling overhead. Specifically, for unified management at the L1 layer, downlink control information (DCI) of a plurality of serving cells can be uniformly sent on one cell, thereby saving signaling overhead of other cells; the network device can also dynamically switch serving cells according to the channel and load on each cell, improving user experience. For unified management at the L2 layer, the SCell can utilize the channel correlation with the PCell to reduce the number of beam scanning during activation, achieving fast activation of the SCell.

In addition, as shown in FIG. 3, carrier 1 corresponds to serving cell 1, carrier 2 corresponds to serving cell 2, and carrier 3 corresponds to serving cell 3. The network device (for example, the remote radio unit (RRU)/active antenna unit (AAU) in FIG. 3) can simultaneously use carrier 1, carrier 2, and carrier 3 to communicate with the terminal device. It can be seen that in the carrier aggregation shown in FIG. 3, different carrier resources belong to different serving cells, thus the cell configuration of different carrier resources needs to be performed independently.

However, for some carriers below (Sub) 3 GHz, the bandwidth of each carrier is small, and the frequency interval between carriers is also small. For such discrete carrier resources with close carrier intervals, if independent cell-level configuration management is still performed, there will be relatively large overhead. Therefore, in the future it is possible to bundle and integrate a plurality of discrete carriers into an integrated single cell. Please refer to FIG. 4, which is a schematic diagram of integrating multiple discrete carriers into a single cell. As shown in FIG. 4, carrier 1, carrier 2, and carrier 3 are bundled and integrated into converged serving cell 1, i.e., carrier 1, carrier 2, and carrier 3 correspond to one serving cell, thereby the network device can perform unified configuration and management of carrier 1, carrier 2, and carrier 3.

Thus, in a future system (for example, a 6G system), a plurality of discrete frequency domain resources may be bundled and integrated into an integrated single cell, i.e., a plurality of discrete frequency domain resources correspond to one serving cell. Here, the plurality of discrete frequency domain resources mean that resource blocks between the plurality of frequency domain resources are non-contiguous. This manner of integrating a plurality of discrete frequency domain resources can reduce the number of serving cells operated by an operator simultaneously, and can also improve the stickiness of the multiple frequency domain resources, promoting refarming.

### 3. Carrier configuration, physical resource block bundling (PRB bundling), and resource block bundling.

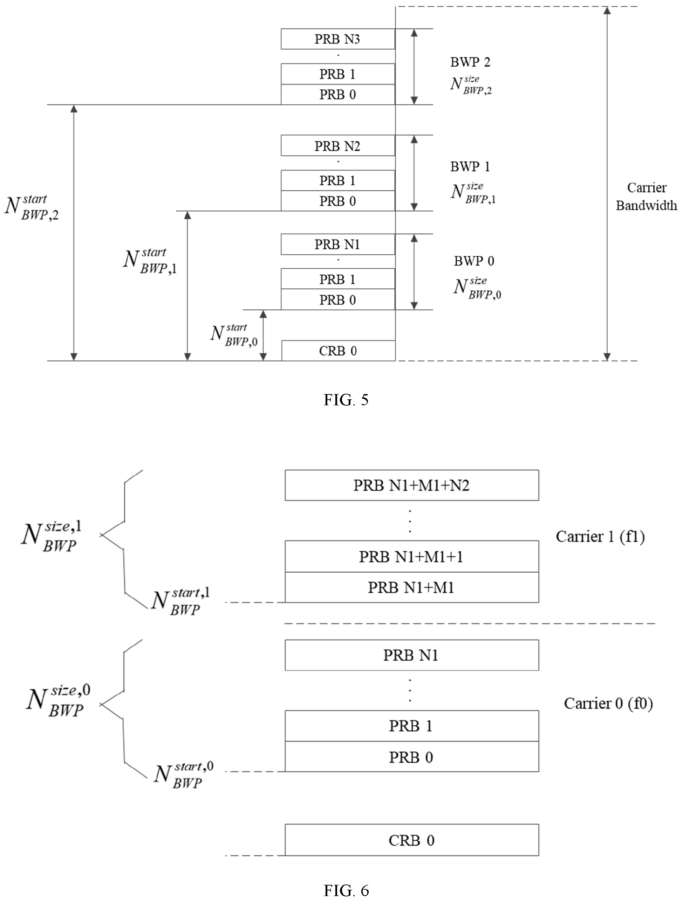

In carrier aggregation, each carrier can be configured using an independent bandwidth part (BWP). FIG. 5 is a schematic diagram of a BWP. The BWP shown in FIG. 5 comprises BWP 0, BWP 1, and BWP 2, where BWP 0 comprises N1+1 physical resource blocks (PRBs), BWP 1 comprises N2+1 PRBs, and BWP 2 comprises N3+1 PRBs, and N1, N2, and N3 are all integers. Each BWP comprises two parameters, one being the starting index ${N}_{BWP , i}^{start}$ of PRBs in the BWP, and the other being the number ${N}_{BWP , i}^{size}$ of PRBs comprised in the BWP, where i represents the index of the BWP. In addition, common resource block (CRB) 0 in FIG. 5 is the reference index for PRBs in each BWP, i.e., the indexes of PRBs in each BWP are all indexed with CRB 0 as the reference.

Physical resource block bundling (PRB bundling) refers to: when physical downlink shared channel (PDSCH) transmission is performed between a network device and a terminal device using a BWP, the terminal device can assume that a contiguous plurality of physical resource blocks (PRBs) will use the same precoding matrix. Herein, the contiguous plurality of PRBs is called a physical resource block group (PRG). Therefore, if the terminal device performs PRB bundling, it needs to determine the PRG corresponding to the BWP.

Similarly, in a future communication system, for one frequency domain resource, the terminal device divides the frequency domain resource into one or more resource groups comprising a contiguous plurality of resource blocks, and assumes that when the network device uses the frequency domain resources within the resource group for data transmission, it will use the same precoding matrix, and this technology can be referred to as resource block bundling. Optionally, this technology may also adopt other names, such as resource bundling, etc., and the embodiments of the present application do not limit its naming.

When a plurality of discrete carriers are bundled and integrated into an integrated single cell, one BWP may comprise a plurality of carriers, and the PRBs between different carriers are non-contiguous. For example, FIG. 6 is a schematic diagram of another BWP. As shown in FIG. 6, the BWP comprises carrier 0 whose center frequency is f0 and carrier 1 whose center frequency is f1, carrier 0 comprises N1+1 PRBs, and carrier 1 comprises N2+1 PRBs. The indexes of PRBs in carrier 0 are from 0 to N1, the indexes of PRBs in carrier 1 are from N1+M1 to N1+M1+N2, and N1, N2, and M1 are all integers. It can be seen that the PRBs of carrier 0 and the PRBs of carrier 1 are non-contiguous, and the PRBs comprised in carrier 0 and carrier 1 respectively are contiguous. In addition, ${N}_{BWP}^{start , 0}$ in FIG. 6 represents the starting index of PRBs in carrier 0, ${N}_{BWP}^{start , 1}$ represents the starting index of PRBs in carrier 1, ${N}_{BWP}^{size , 0}$ represents the number of PRBs comprised in carrier 0, and ${N}_{BWP}^{size , 1}$ represents the number of PRBs comprised in carrier 1.

Similarly, in a future communication system, when a plurality of discrete frequency domain resources are bundled and integrated into an integrated single cell, one first frequency domain resource comprises a plurality of second frequency domain resources, resource blocks between different second frequency domain resources among the plurality of second frequency domain resources are non-contiguous, and the resource blocks of each second frequency domain resource are contiguous.

An embodiment of the present application provides a communication method 100. In the method, a network device sends configuration information to a terminal device, the configuration information is used to configure a resource block bundling size corresponding to each second frequency domain resource in a plurality of second frequency domain resources of a first frequency domain resource, resource blocks between different second frequency domain resources in the plurality of second frequency domain resources are non-contiguous and the resource blocks of each second frequency domain resource are contiguous; the terminal device determines, based on the resource block bundling size corresponding to each second frequency domain resource, a resource group corresponding to each second frequency domain resource.

It can be seen that the first frequency domain resource comprises a plurality of second frequency domain resources, resource blocks between different second frequency domain resources in the plurality of second frequency domain resources are non-contiguous and the resource blocks of each second frequency domain resource are contiguous, then the plurality of discrete second frequency domain resources are bundled and integrated into a single cell corresponding to the first frequency domain resource. In this scenario, the terminal device can determine, based on the configured resource block bundling size corresponding to each second frequency domain resource, the resource group corresponding to each second frequency domain resource, and further the terminal device can perform resource block bundling on each second frequency domain resource, which can reduce power consumption of the terminal device.

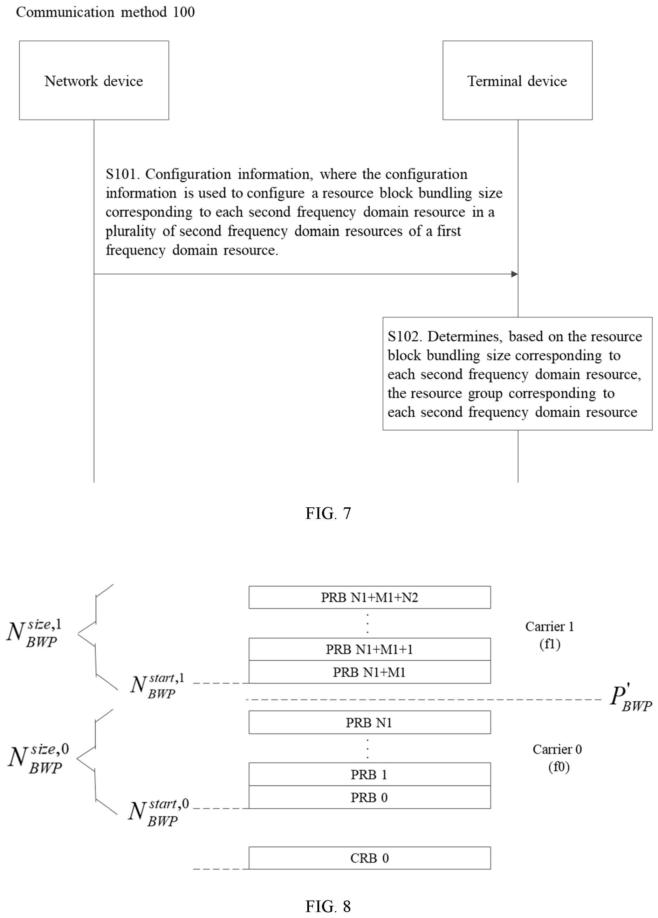

An embodiment of the present application proposes a communication method 100, and FIG. 7 is an interaction schematic diagram of the communication method 100. The communication method 100 is described from the perspective of interaction between the terminal device and the network device. The communication method 100 comprises but is not limited to the following steps:
S101. The network device sends configuration information to the terminal device, the configuration information is used to configure a resource block bundling size corresponding to each second frequency domain resource in a plurality of second frequency domain resources of a first frequency domain resource. Correspondingly, the terminal device receives the configuration information from the network device.

Wherein, resource blocks between different second frequency domain resources in the plurality of second frequency domain resources are non-contiguous and the resource blocks of each second frequency domain resource are contiguous.

It can be understood that the first frequency domain resource comprises a plurality of second frequency domain resources, resource blocks between different second frequency domain resources in the plurality of second frequency domain resources are non-contiguous and the resource blocks of each second frequency domain resource are contiguous, and it can be considered that: the plurality of discrete second frequency domain resources are bundled and integrated into a cell corresponding to the first frequency domain resource.

In addition, the resource block bundling size corresponding to the second frequency domain resource can be understood as: the resource block bundling size referenced when dividing the second frequency domain resource into different groups; or can be understood as: the resource block bundling size adopted when determining the resource group corresponding to the second frequency domain resource. The resource group corresponding to the second frequency domain resource can be understood as: one or more resource groups obtained by dividing the second frequency domain resource based on the resource block bundling size.

In an optional implementation manner, the first frequency domain resource is a bandwidth part (BWP), and the second frequency domain resource is a carrier. It can be seen that the BWP can comprise a plurality of carriers, PRBs between different carriers in the plurality of carriers are non-contiguous and the PRBs in each carrier are contiguous. Alternatively, it can also be understood as: the plurality of carriers are bundled and integrated into a cell corresponding to the BWP.

It can be understood that when the first frequency domain resource is a BWP and the second frequency domain resource is a carrier, the resource block is a physical resource block (PRB), and the resource block bundling size is a PRB bundling size. In this case, the network device configures, through the configuration information, the PRB bundling size corresponding to each carrier for the terminal device, thereby enabling the terminal device to determine, based on the PRB corresponding to each carrier, a PRG corresponding to each carrier, and further the terminal device can perform PRB bundling, which can reduce power consumption of the terminal device.

Optionally, the first frequency domain resource and the second frequency domain resource may also be other forms of frequency domain resources, for example, may be frequency domain resources defined in a future system (such as a 6G system), and the embodiments of the present application are not limited in this regard. Correspondingly, the resource block, the resource block bundling size and the resource group may respectively be a resource block, a resource block bundling size and a resource group defined in the future system, and the embodiments of the present application are not limited in this regard.

It can be seen that the network device, in the scenario where a plurality of discrete second frequency domain resources are bundled and integrated into a cell corresponding to the first frequency domain resource, configures, for the terminal device, the resource block bundling size corresponding to each second frequency domain resource in the plurality of second frequency domain resources, thereby enabling the terminal device to determine, based on the resource block bundling size corresponding to each second frequency domain resource, the resource group corresponding to each second frequency domain resource, and the terminal device can perform resource block bundling, which can reduce power consumption of the terminal device.

In an optional implementation manner, the network device configures, through the configuration information, the same resource block bundling size for the plurality of second frequency domain resources of the first frequency domain resource, that is, the resource block bundling sizes corresponding to the plurality of second frequency domain resources are the same. Alternatively, it can be understood as: the configuration information comprises one resource block bundling size, and this resource block bundling size is the resource block bundling size corresponding to the plurality of second frequency domain resources of the first frequency domain resource. The manner in which the network device configures the same resource block bundling size for the plurality of second frequency domain resources can reduce signaling overhead.

Optionally, the network device configures the resource block bundling sizes corresponding to the plurality of second frequency domain resources all as wideband (wideband). For example, the network device configures the PRB bundling sizes corresponding to the plurality of carriers of the BWP all as wideband.

Optionally, the network device configures the resource block bundling sizes corresponding to the plurality of second frequency domain resources all as *P'*, *P'* is a positive integer. For example, FIG. 8 is a schematic diagram of a PRB bundling size. As shown in FIG. 8, the network device configures the same PRB bundling size for carrier 0 and carrier 1, and the PRB bundling size corresponding to carrier 0 and carrier 1 is ${P}_{BWP}^{′}$.

In an optional implementation manner, the network device determines, based on the sum of bandwidths of the plurality of second frequency domain resources, or the maximum frequency domain interval of the plurality of second frequency domain resources, or the minimum frequency domain interval of the plurality of second frequency domain resources, the resource block bundling size *P'* corresponding to the plurality of second frequency domain resources.

It can be understood that when the sum of the bandwidths of the plurality of second frequency domain resources is within different ranges, the resource block bundling size corresponding to the plurality of second frequency domain resources takes different values. Thus, the network device determines, based on the range within which the sum of the bandwidths of the plurality of second frequency domain resources falls, the resource block bundling size corresponding to the plurality of second frequency domain resources.

Alternatively, when the frequency domain interval of the plurality of second frequency domain resources is within different ranges, the resource block bundling size corresponding to the plurality of second frequency domain resources takes different values. Thus, the network device determines, based on the range within which the maximum frequency domain interval or the minimum frequency domain interval of the plurality of second frequency domain resources falls, the resource block bundling size corresponding to the plurality of second frequency domain resources. Wherein, the maximum frequency domain interval of the plurality of second frequency domain resources refers to the maximum frequency domain interval among the frequency domain intervals of the plurality of second frequency domain resources; the minimum frequency domain interval of the plurality of second frequency domain resources refers to the minimum frequency domain interval among the frequency domain intervals of the plurality of second frequency domain resources. For example, BWP#1 comprises carrier 1, carrier 2 and carrier 3, and the subcarrier spacings of carrier 1, carrier 2 and carrier 3 are 15KHz, 30KHz and 60KHz respectively. Then, the maximum subcarrier spacing of carrier 1, carrier 2 and carrier 3 is 60KHz, and the minimum subcarrier spacing of carrier 1, carrier 2 and carrier 3 is 15KHz.

Optionally, the correspondence relationship between the sum of the bandwidths of the plurality of second frequency domain resources and the resource block bundling size corresponding to the plurality of second frequency domain resources, or the correspondence relationship between the frequency domain interval of the plurality of second frequency domain resources and the resource block bundling size corresponding to the plurality of second frequency domain resources, may be predefined, or may be pre-negotiated between the network device and the terminal device.

For example, the BWP comprises n carriers, and the sum of the bandwidths of the n carriers and the PRB bundling size corresponding to the n carriers have the correspondence relationship shown in Table 1 below. Wherein, n is a positive integer. Then, when the sum of the bandwidths of the n carriers is within the range of 1-12MHz, the network device determines the PRB bundling size ${P}_{BWP}^{′}$ corresponding to the n carriers to be 2; when the sum of the bandwidths of the n carriers is within the range of 12-24MHz, the network device determines the PRB bundling size corresponding to the n carriers to be 4; when the sum of the bandwidths of the n carriers is within the range of 24-36MHz, the network device determines the PRB bundling size corresponding to the n carriers to be 6.

**Table 1**

| Sum of bandwidths of Nn carriers | ${P}_{BWP}^{′}$ |
|---|---|
| 1~12MHz | 2 |
| 12~24 MHz | 4 |
| 24~36 MHz | 6 |

Optionally, the network device may configure, through the configuration information, the correspondence relationship between the sum of the bandwidths of the plurality of second frequency domain resources and the resource block bundling size corresponding to the plurality of second frequency domain resources for the terminal device, and indicate that the resource block bundling size corresponding to each second frequency domain resource is the same. In this case, the network device does not configure the specific value of the resource block bundling size corresponding to the plurality of second frequency domain resources. This manner can enable the terminal device to, after receiving the configuration information, autonomously determine the resource block bundling size corresponding to the plurality of second frequency domain resources based on the correspondence relationship between the sum of the bandwidths of the plurality of second frequency domain resources and the resource block bundling size corresponding to the plurality of second frequency domain resources, and the sum of the bandwidths of the plurality of second frequency domain resources.

Similarly, the network device may configure, through the configuration information, the correspondence relationship between the frequency domain interval of the plurality of second frequency domain resources and the resource block bundling size corresponding to the plurality of second frequency domain resources for the terminal device, and indicate that the resource block bundling size corresponding to each second frequency domain resource is the same. In this case, the network device also does not configure the specific value of the resource block bundling size corresponding to the plurality of second frequency domain resources. This manner can enable the terminal device to, after receiving the configuration information, autonomously determine the resource block bundling size corresponding to the plurality of second frequency domain resources based on the correspondence relationship between the frequency domain interval of the plurality of second frequency domain resources and the resource block bundling size corresponding to the plurality of second frequency domain resources, and the maximum frequency domain interval or the minimum frequency domain interval of the plurality of second frequency domain resources.

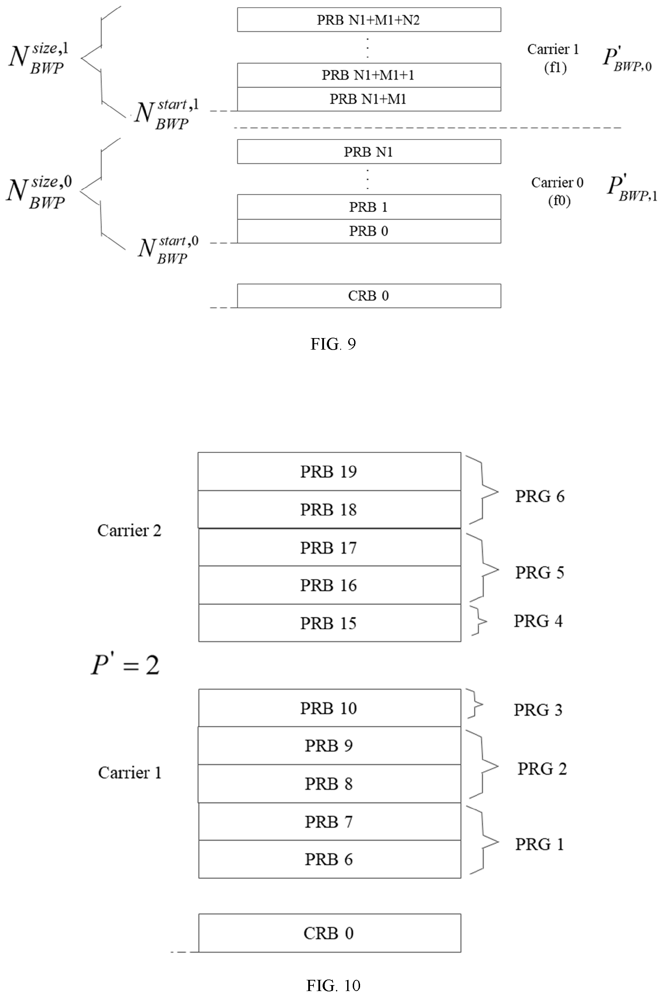

In another optional implementation manner, the network device configures, through the configuration information, different resource block bundling sizes for the plurality of second frequency domain resources of the first frequency domain resource, that is, the resource block bundling sizes corresponding to the plurality of second frequency domain resources are different. It can also be understood as: the configuration information comprises the resource block bundling size corresponding to each second frequency domain resource, and the resource block bundling size corresponding to each second frequency domain resource is different. For example, FIG. 9 is a schematic diagram of another PRB bundling size. As shown in FIG. 9, the network device configures different PRB bundling sizes for carrier 0 and carrier 1, the PRB bundling size corresponding to carrier 0 is ${P}_{BWP , 0}^{′}$, and the PRB bundling size corresponding to carrier 1 is ${P}_{BWP , 1}^{′}$.

Optionally, the network device configures the resource block bundling sizes corresponding to the plurality of second frequency domain resources as different, and configures the resource block bundling size corresponding to the n-th second frequency domain resource in the plurality of second frequency domain resources as wideband, wherein n is a positive integer. For example, the network device configures the PRB bundling sizes corresponding to the plurality of carriers of the BWP as different, and configures the PRB bundling size corresponding to the n-th carrier in the plurality of carriers as wideband.

Optionally, the network device configures the resource block bundling sizes corresponding to the plurality of second frequency domain resources as different, and for the n-th second frequency domain resource in the plurality of second frequency domain resources: determines, based on the bandwidth or the frequency domain interval of the second frequency domain resource, the resource block bundling size corresponding to the n-th second frequency domain resource. It can be understood that when the bandwidth or the frequency domain interval of the second frequency domain resource falls within different ranges, the value of the resource block bundling size corresponding to the second frequency domain resource is different. Thus, the network device determines, based on the range within which the bandwidth or the frequency domain interval of the n-th second frequency domain resource falls, the resource block bundling size corresponding to the n-th second frequency domain resource. Wherein, the correspondence relationship between the bandwidth or the frequency domain interval of the second frequency domain resource and the resource block bundling size corresponding to the second frequency domain resource may be predefined, or may be pre-negotiated between the network device and the terminal device.

For example, when the bandwidth of the carrier is within the range of 1-12MHz, the network device determines the PRB bundling size of the carrier to be 2. For another example, when the bandwidth of the carrier is within the range of 12-24MHz, the network device determines the PRB bundling size of the carrier to be 4. When the bandwidth of the carrier is within the range of 24-36MHz, the network device determines the PRB bundling size of the carrier to be 6.

In summary, when a plurality of second frequency domain resources are integrated into a single cell corresponding to the first frequency domain resource, the network device configures, through the configuration information, the resource block bundling size corresponding to each second frequency domain resource in the plurality of second frequency domain resources for the terminal device. Wherein, the resource block bundling size corresponding to each second frequency domain resource may be the same or different. This manner can enable the terminal device to determine, based on the resource block bundling size corresponding to each second frequency domain resource, the resource group corresponding to each second frequency domain resource, and thus the terminal device can perform resource block bundling, which can reduce power consumption of the terminal device.

S102. The terminal device determines, based on the resource block bundling size corresponding to each second frequency domain resource, the resource group corresponding to each second frequency domain resource.

It can be understood that when the resource block bundling size corresponding to each second frequency domain resource is the same or different, the implementation manner in which the terminal device determines the resource group corresponding to each second frequency domain resource is different. The following describes, in conjunction with the two cases where the resource block bundling size corresponding to each second frequency domain resource is the same or different, the implementation manner in which the terminal device determines the resource group corresponding to each second frequency domain resource:
Case 1: The resource block bundling size corresponding to each second frequency domain resource is the same.

In an optional implementation manner, when the resource block bundling size corresponding to each second frequency domain resource is the same, the terminal device determines that the resource group corresponding to each second frequency domain resource comprises M resource blocks, and the M resource blocks are the resource blocks occupied by the second frequency domain resource. Alternatively, it can be understood as: when the resource block bundling size corresponding to each second frequency domain resource is the same, the terminal device determines that the size of the resource group corresponding to each second frequency domain resource is M.

Optionally, when the resource block bundling size corresponding to each second frequency domain resource is the same, and the resource block bundling size corresponding to the plurality of second frequency domain resources is configured as wideband, the terminal device determines that the resource group corresponding to each second frequency domain resource comprises M resource blocks, that is, determines that the size of the resource group corresponding to each second frequency domain resource is M.

That is to say, when the resource block bundling size corresponding to each second frequency domain resource is the same, and the resource block bundling size corresponding to the plurality of second frequency domain resources is configured as wideband, the resource group corresponding to each second frequency domain resource is one resource group, and the resource group comprises all resource blocks occupied by the second frequency domain resource, or it can be understood as: the size of the resource group is all resource blocks occupied by the second frequency domain resource.

For example, when the configuration information is used to configure the resource block bundling size corresponding to each carrier in the plurality of carriers all as wideband, the terminal device determines one PRG corresponding to each carrier, and the PRG comprises all PRBs occupied by the carrier.

In another optional implementation manner, when the resource block bundling size corresponding to each second frequency domain resource is the same and is *P'*, for the n-th second frequency domain resource in the plurality of second frequency domain resources: the size of the first resource group of the n-th second frequency domain resource is *P'* - *N^{start,n} modP'* ; if (*N^{start,n}* + *N^{size,n}*) *mod P'* ≠ 0, the size of the last resource group of the n-th second frequency domain resource is (*N^{start,n}* + *N^{size,n}*) *mod P'*; if (*N^{start,n}* + *N^{size,n}*) *mod P'* =0, the size of the last resource group of the n-th second frequency domain resource is *P'*.

Wherein, *N^{start,n}* is the starting index of the resource blocks in the n-th second frequency domain resource, *N^{size,n}* is the number of resource blocks comprised in the n-th second frequency domain resource, *mod* is a modulo function, and *P'* and n are positive integers.

In addition, that the size of the first resource group of the n-th second frequency domain resource is *P' - N^{start,n} modP'* can be understood as: the size of the first resource group of the n-th second frequency domain resource is 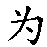 *P' - N^{start,n} modP'* contiguous resource blocks, or can be understood as: the first resource group of the n-th second frequency domain resource comprises *P' - N^{start,n} modP'* contiguous resource blocks. Similarly, that the size of the last resource group of the n-th second frequency domain resource is (*N^{start,n}* + *N^{size,n}*) *mod P'* can be understood as: the size of the last resource group of the n-th second frequency domain resource is (*N^{start,n}* + *N^{size,n}*) *mod P'* contiguous resource blocks, or can be understood as: the last resource group of the n-th second frequency domain resource comprises (*N^{start,n}* + *N^{size,n}*) *mod P'* contiguous resource blocks. That the size of the last resource group of the n-th second frequency domain resource is *P'* can be understood as: the size of the last resource group of the n-th second frequency domain resource is *P'* contiguous resource blocks, or can be understood as: the last resource group of the n-th second frequency domain resource comprises *P'* contiguous resource blocks.

It can be seen that if the network device configures, through the configuration information, the resource block bundling size corresponding to the plurality of second frequency domain resources as *P'*, then when the terminal device determines the resource groups corresponding to the plurality of second frequency domain resources, it adopts the resource block bundling size *P'* uniformly. Specifically, for the n-th second frequency domain resource therein, the terminal device can determine, based on *P',* the starting index of the resource blocks in the n-th second frequency domain resource, and the number of resource blocks comprised in the n-th second frequency domain resource, the size of the first resource group and the size of the last resource group in the resource groups corresponding to the n-th second frequency domain resource. In addition, the sizes of the other resource groups in the resource groups corresponding to the n-th second frequency domain resource, except the first resource group and the last resource group, are all *P',* or it can be understood as: the other resource groups corresponding to the n-th second frequency domain resource all comprise *P'* contiguous resource blocks.

It can also be understood as: when the network device configures, through the configuration information, the resource block bundling sizes corresponding to the plurality of second frequency domain resources all as *P'*, for the n-th second frequency domain resource therein, the terminal device can, based on *P'*, the starting index of the resource blocks in the n-th second frequency domain resource and the number of resource blocks comprised in the n-th second frequency domain resource, divide all resource blocks in the n-th second frequency domain resource into several resource groups, and the number of contiguous resource blocks comprised in each resource group is less than or equal to *P'*.

Exemplarily, FIG. 10 is a schematic diagram of a PRG. As shown in FIG. 10, the BWP comprises carrier 1 and carrier 2, the indices of the PRBs in carrier 1 are 6-10, the indices of the PRBs in carrier 2 are 15-19, and the network device configures, through the configuration information, the PRB bundling size for carrier 1 and carrier 2 both as 2. For carrier 1, the terminal device determines that the size of the first PRG corresponding to carrier 1 is 2-6mod2=2; (6+5)mod2≠0, then the size of the last PRG corresponding to carrier 1 is (6+5)mod2=1. Further, as shown in FIG. 10, the terminal device determines that the PRGs corresponding to carrier 1 comprise PRG 1, PRG 2 and PRG 3, PRG 1 comprises PRB 6 and PRB 7, PRG 2 comprises PRB 8 and PRB 9, and PRG 3 comprises PRB 10. For carrier 2, the terminal device determines that the size of the first PRG corresponding to carrier 2 is 2-15mod2=1; (15+5)mod2=0, then the size of the last PRG corresponding to carrier 2 is 2. Further, as shown in FIG. 10, the terminal device determines that the PRGs corresponding to carrier 2 comprise PRG 4, PRG 5 and PRG 6, PRG 4 comprises PRB 15, PRG 5 comprises PRB 16 and PRB 17, and PRG 6 comprises PRB 18 and PRB 19.

Optionally, when the network device configures, through the configuration information, the correspondence relationship between the sum of the bandwidths of the plurality of second frequency domain resources and the resource block bundling size corresponding to the plurality of second frequency domain resources for the terminal device, and indicates that the resource block bundling sizes corresponding to the plurality of second frequency domain resources are the same, the terminal device determines, based on the correspondence relationship between the sum of the bandwidths of the plurality of second frequency domain resources and the resource block bundling size corresponding to the plurality of second frequency domain resources, and the sum of the bandwidths of the plurality of second frequency domain resources, the resource block bundling size corresponding to the plurality of second frequency domain resources. The terminal device then determines, based on the resource block bundling size corresponding to the plurality of second frequency domain resources, the resource group corresponding to each second frequency domain resource in the plurality of second frequency domain resources.

Optionally, when the network device configures, through the configuration information, the correspondence relationship between the frequency domain interval of the plurality of second frequency domain resources and the resource block bundling size corresponding to the plurality of second frequency domain resources for the terminal device, and indicates that the resource block bundling sizes corresponding to the plurality of second frequency domain resources are the same, the terminal device determines, based on the correspondence relationship between the frequency domain interval of the plurality of second frequency domain resources and the resource block bundling size corresponding to the plurality of second frequency domain resources, and the maximum frequency domain interval or the minimum frequency domain interval of the plurality of second frequency domain resources, the resource block bundling size corresponding to the plurality of second frequency domain resources. The terminal device then determines, based on the resource block bundling size corresponding to the plurality of second frequency domain resources, the resource group corresponding to each second frequency domain resource in the plurality of second frequency domain resources.

Case 2: The resource block bundling size corresponding to each second frequency domain resource is different.

In an optional implementation manner, when the configuration information comprises the resource block bundling size corresponding to each second frequency domain resource in the plurality of second frequency domain resources, the terminal device determines that the resource block bundling sizes corresponding to each second frequency domain resource are different.

In an optional implementation manner, when the resource block bundling size corresponding to the n-th second frequency domain resource in the plurality of second frequency domain resources is configured as wideband, the terminal device determines that the resource group corresponding to the n-th second frequency domain resource comprises M resource blocks, and the M resource blocks are the resource blocks occupied by the n-th second frequency domain resource. Alternatively, it can be understood as: when the resource block bundling size corresponding to the n-th second frequency domain resource in the plurality of second frequency domain resources is configured as wideband, the terminal device determines that the size of the resource group corresponding to the n-th second frequency domain resource is M.

For example, when the configuration information configures the PRB bundling size corresponding to the n-th carrier in the plurality of carriers as wideband, the terminal device determines one PRG corresponding to the n-th carrier, and the PRG comprises all PRBs occupied by the n-th carrier.

In an optional implementation manner, for the n-th second frequency domain resource in the plurality of second frequency domain resources: the size of the first resource group of the n-th second frequency domain resource is ${P}_{n}^{′} - {N}^{start , n} {modP}_{n}^{′}$; if $\left({N}^{start , n}+{N}^{size , n}\right) {modP}_{n}^{′} \neq 0$, the size of the last resource group of the n-th second frequency domain resource is $\left({N}^{start , n}+{N}^{size , n}\right) {modP}_{n}^{′}$; if $\left({N}^{start , n}+{N}^{size , n}\right) {modP}_{n}^{′} = 0$, the size of the last resource group of the n-th second frequency domain resource is ${P}_{n}^{′}$.

Wherein, *N^{start,n}* is the starting index of the resource blocks in the n-th second frequency domain resource, *N^{size,n}* is the number of resource blocks comprised in the n-th second frequency domain resource, ${P}_{n}^{′}$ is the resource block bundling size corresponding to the n-th second frequency domain resource, *mod* is a modulo function, and ${P}_{n}^{′}$ and n are positive integers.

In addition, that the size of the first resource group of the n-th second frequency domain resource is ${P}_{n}^{′} - {N}^{start , n} {modP}_{n}^{′}$ can be understood as: the size of the first resource group of the n-th second frequency domain resource is ${P}_{n}^{′} - {N}^{start , n} {modP}_{n}^{′}$ contiguous resource blocks, or can be understood as: the first resource group of the n-th second frequency domain resource comprises ${P}_{n}^{′} - {N}^{start , n} {modP}_{n}^{′}$ contiguous resource blocks. That the size of the last resource group of the n-th second frequency domain resource is $\left({N}^{start , n}+{N}^{size , n}\right) {modP}_{n}^{′}$ can be understood as: the size of the last resource group of the n-th second frequency domain resource is $\left({N}^{start , n}+{N}^{size , n}\right) {modP}_{n}^{′}$ contiguous resource blocks, or can be understood as: the last resource group of the n-th second frequency domain resource comprises $\left({N}^{start , n}+{N}^{size , n}\right) {modP}_{n}^{′}$ contiguous resource blocks. That the size of the last resource group of the n-th second frequency domain resource is ${P}_{n}^{′}$ can be understood as: the size of the last resource group of the n-th second frequency domain resource is ${P}_{n}^{′}$ contiguous resource blocks; or can be understood as: the last resource group of the n-th second frequency domain resource comprises ${P}_{n}^{′}$ contiguous resource blocks.

It can be seen that when the network device configures, through the configuration information, the resource block bundling sizes corresponding to the plurality of second frequency domain resources as different, the terminal device adopts the resource block bundling size corresponding to each second frequency domain resource in the plurality of second frequency domain resources to determine the resource group corresponding to that second frequency domain resource. Specifically, for the n-th second frequency domain resource therein, the terminal device can determine, based on the resource block bundling size ${P}_{n}^{′}$, the starting index of the resource blocks in the n-th second frequency domain resource and the number of resource blocks comprised in the n-th second frequency domain resource, the size of the first resource group and the size of the last resource group in the resource groups corresponding to the n-th second frequency domain resource. In addition, the sizes of the other resource groups in the resource groups corresponding to the n-th second frequency domain resource, except the first resource group and the last resource group, are all ${P}_{n}^{′}$, and it can also be understood as: the other resource groups corresponding to the n-th second frequency domain resource all comprise ${P}_{n}^{′}$ contiguous resource blocks.

That is to say, when the network device configures, through the configuration information, the resource block bundling sizes corresponding to the plurality of second frequency domain resources as different, for the n-th second frequency domain resource therein, the terminal device can, based on the resource block bundling size ${P}_{n}^{′}$, the starting index of the resource blocks in the n-th second frequency domain resource and the number of resource blocks comprised in the n-th second frequency domain resource, divide all resource blocks in the n-th second frequency domain resource into several resource groups, and the number of contiguous resource blocks comprised in each resource group is less than or equal to ${P}_{n}^{′}$.

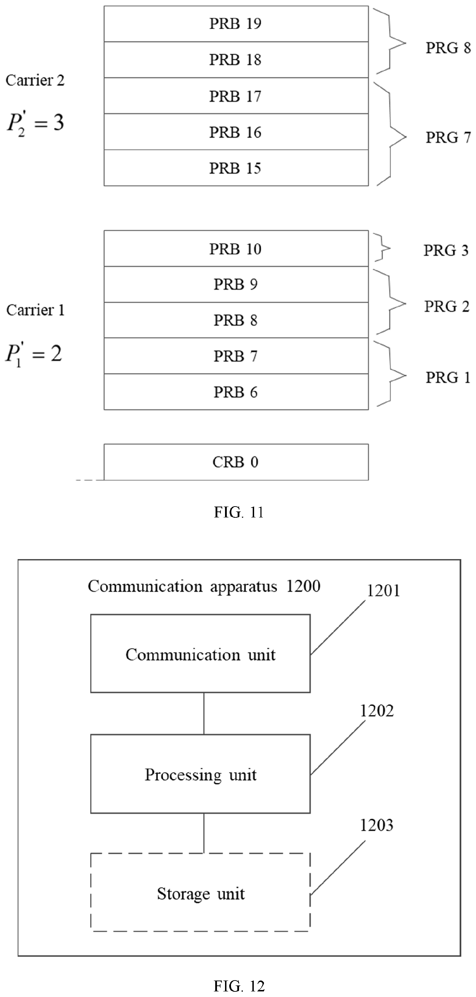

Exemplarily, FIG. 11 is a schematic diagram of another PRG. As shown in FIG. 11, the BWP comprises carrier 1 and carrier 2, the indices of the PRBs in carrier 1 are 6-10, and the indices of the PRBs in carrier 2 are 15-19. The network device configures, through the configuration information, the PRB bundling size for carrier 1 as 2, and the PRB bundling size for carrier 2 as 3. For carrier 1, as described above, the terminal device determines that the PRGs corresponding to carrier 1 comprise PRG 1, PRG 2 and PRG 3, PRG 1 comprises PRB 6 and PRB 7, PRG 2 comprises PRB 8 and PRB 9, and PRG 3 comprises PRB 10. For carrier 2, the terminal device determines that the size of the first PRG corresponding to carrier 2 is 3-15 *mod*3=3; (15+5)*mod* 3≠ 0, then the size of the last PRG corresponding to carrier 2 is (15+5)*mod* 3=2. Further, as shown in FIG. 11, the terminal device determines that the PRGs corresponding to carrier 2 comprise PRG 7 and PRG 8, PRG 7 comprises PRB 15, PRB 16 and PRB 17, and PRG 8 comprises PRB 18 and PRB 19.

It can be seen that when the network device configures, through the configuration information, the same or a single resource block bundling size for the plurality of second frequency domain resources, the terminal device adopts the configured resource block bundling size to perform resource block bundling on each second frequency domain resource, that is, determines the resource group corresponding to each second frequency domain resource. When the network device configures, through the configuration information, different resource block bundling sizes for each second frequency domain resource in the plurality of second frequency domain resources, the terminal device adopts the resource block bundling size configured for each second frequency domain resource to perform resource block bundling on that second frequency domain resource, that is, determines the resource group corresponding to that second frequency domain resource.

It can be understood that the terminal device determining the resource group corresponding to each second frequency domain resource can be understood as: performing resource block bundling on each second frequency domain resource. Thus, the terminal device considers that when the network device uses the frequency domain resources within the same resource group to transmit data, the precoding matrix used is the same. Further, for each resource group, the terminal device determines the decoding matrix corresponding to each resource group, so as to receive data transmitted by the network device using each resource group. The manner in which the terminal device determines the decoding matrix corresponding to each resource group, compared with the manner in which the terminal device determines the decoding matrix corresponding to each resource block in each second frequency domain resource, can reduce power consumption of the terminal device.

In an optional implementation manner, the terminal device determines that when the network device uses different resource groups to transmit data, the precoding matrices used are different, and thus the terminal device determines the decoding matrix corresponding to each resource group respectively. Optionally, the terminal device determines that when the network device uses different resource groups to transmit data, the precoding matrices used are the same, and thus the terminal device can determine one decoding matrix corresponding to the plurality of resource groups.

It can be seen that in the embodiments of the present application, the first frequency domain resource comprises a plurality of second frequency domain resources, resource blocks between different second frequency domain resources in the plurality of second frequency domain resources are non-contiguous and the resource blocks of each second frequency domain resource are contiguous, then the plurality of discrete second frequency domain resources are bundled and integrated into a single cell corresponding to the first frequency domain resource. In this scenario, the network device configures the resource block bundling size of each second frequency domain resource for the terminal device, thereby the terminal device determines, based on the resource block bundling size corresponding to each second frequency domain resource, the resource group corresponding to each second frequency domain resource, and further performs resource block bundling on each second frequency domain resource, which can reduce power consumption of the terminal device.

With respect to the technical solutions described above, corresponding apparatus implementation solutions are further described below.

In order to implement the functions in the methods provided by the embodiments of the present application described above, the terminal device and the network device may include hardware structures and/or software modules, and implement the above functions in the form of hardware structures, software modules, or hardware structures plus software modules. Whether a certain function among the above functions is executed in the form of a hardware structure, a software module, or a hardware structure plus a software module depends on the specific application and design constraint conditions of the technical solution.

As shown in FIG. 12, an embodiment of the present application provides a communication apparatus 1200. The communication apparatus 1200 may be a component of a terminal device (for example, an integrated circuit, a chip, etc.), or may be a component of a network device (for example, an integrated circuit, a chip, etc.). The communication apparatus 1200 may also be another communication unit, used to implement the methods in the method embodiments of the present application. The communication apparatus 1200 may include: a communication unit 1201 and a processing unit 1202. Optionally, it may also include a storage unit 1203.

In a possible design, one or more units as shown in FIG. 12 may be implemented by one or more processors, or by one or more processors and memories; or by one or more processors and transceivers; or by one or more processors, memories, and transceivers, which is not limited by the embodiments of the present application. The processors, memories, and transceivers may be provided separately or may be integrated.

The communication apparatus 1200 has the functions of implementing the terminal device described in the embodiments of the present application, or the functions of the network device. For example, the communication apparatus 1200 includes modules or units or means corresponding to the steps involved by the terminal device in the terminal device executing each of the above method embodiments, and the functions or units or means may be implemented by software, or by hardware, or by hardware executing corresponding software, or by a combination of software and hardware. For details, further reference may be made to the corresponding description in the foregoing corresponding method embodiments.

In a possible design, the communication apparatus 1200 may include: a processing unit 1202 and a communication unit 1201, and the apparatus is applied to a terminal device;
the communication unit 1201 is configured to receive configuration information, where the configuration information is used to configure a resource block bundling size corresponding to each second frequency domain resource of a plurality of second frequency domain resources of a first frequency domain resource, where resource blocks between different second frequency domain resources among the plurality of second frequency domain resources are non-contiguous and resource blocks of each second frequency domain resource are contiguous;
the processing unit 1202 is configured to determine, based on the resource block bundling size corresponding to each second frequency domain resource, a resource group corresponding to each second frequency domain resource.

In an optional implementation, the first frequency domain resource is a bandwidth part (BWP), the second frequency domain resource is a carrier, the resource block is a physical resource block (PRB), the resource block bundling size is a physical resource block (PRB) bundling size, and the resource group is a physical resource block group (PRG).

In an optional implementation, the resource block bundling size corresponding to each second frequency domain resource is the same, the resource group corresponding to each second frequency domain resource comprises M resource blocks, the M resource blocks are resource blocks occupied by the second frequency domain resource, and M is a positive integer.

In another optional implementation, the resource block bundling size corresponding to each second frequency domain resource is the same, and for the n-th second frequency domain resource among the plurality of second frequency domain resources: the size of the first resource group of the n-th second frequency domain resource is *P'* - *N^{start,n} modP*'; if (*N^{start,n}* + *N^{size,n}*) *mod P'* ≠ 0 , the size of the last resource group of the n-th second frequency domain resource is (*N^{start,n}* + *N^{size,n}*) *mod P'*; if (*N^{start,n}* + *N^{size,n}*) *mod P'* =0, the size of the last resource group of the n-th second frequency domain resource is *P'*; wherein *N^{start,n}* is a starting index of resource blocks in the n-th second frequency domain resource, *N^{size,n}* is the number of resource blocks included in the n-th second frequency domain resource, *P'* is the resource block bundling size corresponding to the plurality of second frequency domain resources, *mod* is a modulo function, and *P'* and n are positive integers.

In an optional implementation, *P'* is determined based on one of the following: a sum of bandwidths of the plurality of second frequency domain resources, a maximum frequency domain interval among the plurality of second frequency domain resources, or a minimum frequency domain interval among the plurality of second frequency domain resources.

In yet another optional implementation, the resource block bundling size corresponding to each second frequency domain resource is different, the resource group corresponding to the n-th second frequency domain resource among the plurality of second frequency domain resources comprises M resource blocks, the M resource blocks are resource blocks occupied by the n-th second frequency domain resource, and M and n are positive integers.

In yet another optional implementation, the resource block bundling size corresponding to each second frequency domain resource is different, and for the n-th second frequency domain resource among the plurality of second frequency domain resources: the size of the first resource group of the n-th second frequency domain resource is ${P}_{n}^{′} - {N}^{start , n} {modP}_{n}^{′}$; if $\left({N}^{start , n}+{N}^{size , n}\right) {modP}_{n}^{′} \neq 0$ , the size of the last resource group of the n-th second frequency domain resource is $\left({N}^{start , n}+{N}^{size , n}\right) {modP}_{n}^{′}$; if $\left({N}^{start , n}+{N}^{size , n}\right) {modP}_{n}^{′} = 0$, the size of the last resource group of the n-th second frequency domain resource is ${P}_{n}^{′}$; wherein *N^{start,n}* is a starting index of resource blocks in the n-th second frequency domain resource, *N^{size,n}* is the number of resource blocks included in the n-th second frequency domain resource, ${P}_{n}^{′}$ is the resource block bundling size corresponding to the n-th second frequency domain resource, *mod* is a modulo function, and ${P}_{n}^{′}$ and n are positive integers.

In an optional implementation, ${P}_{n}^{′}$ is determined based on a bandwidth or a frequency domain interval of the n-th second frequency domain resource.

In an optional implementation, precoding matrices used between different resource groups are different.

The embodiments of the present application and the method embodiments shown above are based on the same concept, and the technical effects brought thereby are also the same. For the specific principle, please refer to the description of the embodiments shown above, which will not be repeated.

In another possible design, the communication apparatus 1200 may include: a processing unit 1202 and a communication unit 1201, where the apparatus is applied to a network device, and the processing unit 1202 is configured to process signals/signaling;
the communication unit 1201 is configured to send first configuration information, where the configuration information is used to configure a resource block bundling size corresponding to each second frequency domain resource of a plurality of second frequency domain resources of a first frequency domain resource, where resource blocks between different second frequency domain resources among the plurality of second frequency domain resources are non-contiguous and resource blocks of each second frequency domain resource are contiguous; and the resource block bundling size corresponding to each second frequency domain resource is used to determine a resource group corresponding to the second frequency domain resource.

In an optional implementation, the first frequency domain resource is a bandwidth part (BWP), the second frequency domain resource is a carrier, the resource block is a physical resource block (PRB), the resource block bundling size is a physical resource block (PRB) bundling size, and the resource group is a physical resource block group (PRG).

In an optional implementation, the resource block bundling size corresponding to each second frequency domain resource is the same, the resource group corresponding to each second frequency domain resource comprises M resource blocks, the M resource blocks are resource blocks occupied by the second frequency domain resource, and M is a positive integer.

In another optional implementation, the resource block bundling size corresponding to each second frequency domain resource is the same, and for the n-th second frequency domain resource among the plurality of second frequency domain resources: the size of the first resource group of the n-th second frequency domain resource is *P'* - *N^{start,n} modP*'; if (*N^{start,n}* + *N^{size,n}*) *mod P'* ≠ 0 , the size of the last resource group of the n-th second frequency domain resource is (*N^{start,n}* + *N^{size,n}*) *mod P'*; if (*N^{start,n}* + *N^{size,n}*) *mod P'* =0, the size of the last resource group of the n-th second frequency domain resource is *P'*; wherein *N^{start,n}* is a starting index of resource blocks in the n-th second frequency domain resource, *N^{size,n}* is the number of resource blocks included in the n-th second frequency domain resource, *P'* is the resource block bundling size corresponding to the plurality of second frequency domain resources, *mod* is a modulo function, and *P'* and n are positive integers.

In an optional implementation, *P'* is determined based on one of the following: a sum of bandwidths of the plurality of second frequency domain resources, a maximum frequency domain interval among the plurality of second frequency domain resources, or a minimum frequency domain interval among the plurality of second frequency domain resources.

In yet another optional implementation, the resource block bundling size corresponding to each second frequency domain resource is different, the resource group corresponding to the n-th second frequency domain resource among the plurality of second frequency domain resources comprises M resource blocks, the M resource blocks are resource blocks occupied by the n-th second frequency domain resource, and M and n are positive integers.

In yet another optional implementation, the resource block bundling size corresponding to each second frequency domain resource is different, and for the n-th second frequency domain resource among the plurality of second frequency domain resources: the size of the first resource group of the n-th second frequency domain resource is ${P}_{n}^{′} - {N}^{start , n} {modP}_{n}^{′}$; if $\left({N}^{start , n}+\right.$+ $\left.{N}^{size , n}\right) {modP}_{n}^{′} \neq 0$, the size of the last resource group of the n-th second frequency domain resource is $\left({N}^{start , n}+{N}^{size , n}\right) {modP}_{n}^{′}$; if $\left({N}^{start , n}+{N}^{size , n}\right) {modP}_{n}^{′} = 0$, the size of the last resource group of the n-th second frequency domain resource is ${P}_{n}^{′}$; wherein *N^{start,n}* is a starting index of resource blocks in the n-th second frequency domain resource, *N^{size,n}* is the number of resource blocks included in the n-th second frequency domain resource, ${P}_{n}^{′}$ is the resource block bundling size corresponding to the n-th second frequency domain resource, *mod* is a modulo function, and ${P}_{n}^{′}$ and n are positive integers.

In an optional implementation, ${P}_{n}^{′}$ is determined based on a bandwidth or a frequency domain interval of the n-th second frequency domain resource.

In an optional implementation, precoding matrices used between different resource groups are different.

The embodiments of the present application and the method embodiments shown above are based on the same concept, and the technical effects brought thereby are also the same. For the specific principle, please refer to the description of the embodiments shown above, which will not be repeated.

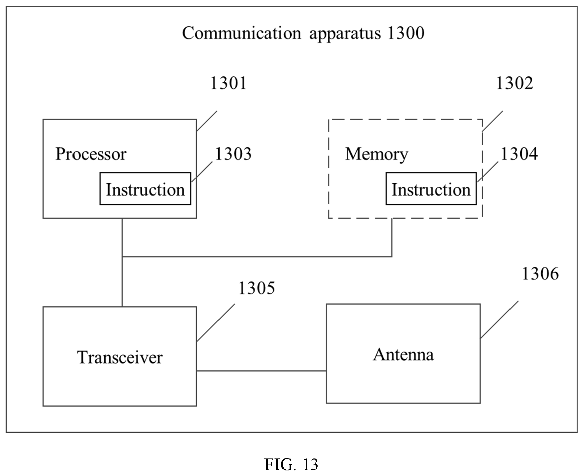

An embodiment of the present application further provides a communication apparatus 1300, and FIG. 13 is a structural schematic diagram of the communication apparatus 1300. The communication apparatus 1300 may be a terminal device, or may be a chip, a chip system, or a processor that supports the terminal device in implementing the above method; or may be a network device, or may be a chip, a chip system, or a processor that supports the network device in implementing the above method. The apparatus may be used to implement the methods described in the above method embodiments, and for details, reference may be made to the description in the above method embodiments.

The communication apparatus 1300 may include one or more processors 1301. The processor 1301 may be a general-purpose processor or a special-purpose processor, etc. For example, it may be a baseband processor, a digital signal processor, an application-specific integrated circuit, a field programmable gate array or other programmable logic devices, discrete gate or transistor logic devices, discrete hardware components, or a central processing unit (CPU). The baseband processor may be used to process a communication protocol and communication data, and the central processing unit may be used to control a communication apparatus (such as a base station, a baseband chip, a terminal, a terminal chip, a DU or a CU, etc.), execute software programs, and process data of the software programs.

Optionally, the communication apparatus 1300 may include one or more memories 1302, on which instructions 1304 may be stored, and the instructions may be executed on the processor 1301, so that the communication apparatus 1300 executes the methods described in the above method embodiments. Optionally, data may also be stored in the memory 1302. The processor 1301 and the memory 1302 may be provided separately or may be integrated together.

Optionally, the communication apparatus 1300 may further include a transceiver 1305 and an antenna 1306. The transceiver 1305 may be referred to as a transceiver unit, a transceiver, or a transceiver circuit, etc., and is used to implement transceiving functions. The transceiver 1305 may include a receiver and a transmitter, where the receiver may be referred to as a receiver or a receiving circuit, etc., and is used to implement a receiving function; and the transmitter may be referred to as a transmitter or a transmitting circuit, etc., and is used to implement a transmitting function.

In a possible design, the communication apparatus 1300 may be applied to a terminal device, and specifically, the transceiver 1305 is configured to execute S101 in the above communication method 100; and the processor 1301 is configured to execute S102 in the above communication method 100.

In another possible design, the communication apparatus 1300 may be applied to a network device, and specifically, the transceiver 1305 is configured to execute S101 in the above communication method 100.

Optionally, the processor 1301 may have instructions 1303 stored therein, and the instructions 1303, when executed on the processor 1301, may cause the communication apparatus 1300 to execute the methods described in the above method embodiments. The instructions 1303 may be solidified in the processor 1301, in which case, the processor 1301 may be implemented by hardware.

The embodiments of the present application and the method embodiments shown in the above communication method 100 are based on the same concept, and the technical effects brought thereby are also the same. For the specific principle, please refer to the description of the embodiments shown in the above communication method 100, which will not be repeated.

An embodiment of the present application further provides a communication system, and the system may include a terminal device and a network device. In another possible design, the system may further include other devices/functional network elements that interact with the terminal device and the network device.

An embodiment of the present application further provides a computer-readable storage medium for storing computer software instructions, and when the instructions are executed by a communication apparatus, the functions of any one of the above method embodiments are realized.

An embodiment of the present application further provides a computer program product for storing computer software instructions, and when the instructions are executed by a communication apparatus, the functions of any one of the above method embodiments are realized.

An embodiment of the present application further provides a computer program, which, when running on a computer, realizes the functions of any one of the above method embodiments.

The terms "first" and "second" and the like in the specification, claims, and accompanying drawings of the embodiments of the present application are used to distinguish different objects, rather than to describe a specific order. "First", "second", etc. are merely used for descriptive purposes and shall not be understood as indicating or implying relative importance or implicitly indicating the number of the indicated technical features. Thus, a feature defined with "first", "second", etc. may explicitly or implicitly include one or more of the feature. In the description of the present embodiment, unless otherwise stated, "a plurality of" means two or more.

In addition, the terms "comprising" and "having" and any variations thereof are intended to cover non-exclusive inclusion. For example, a process, method, system, product, or apparatus comprising a series of steps or units is not limited to the listed steps or units, but optionally also includes steps or units that are not listed, or optionally also includes other steps or units inherent to these processes, methods, products, or apparatus.

The mention of "embodiment" in the embodiments of the present application means that a specific feature, structure, or characteristic described in connection with the embodiment may be included in at least one embodiment of the present application. The appearance of the phrase in various places in the specification does not necessarily refer to the same embodiment, nor is it an independent or alternative embodiment mutually exclusive with other embodiments. Those skilled in the art understand explicitly and implicitly that the embodiments described herein may be combined with other embodiments.

In the embodiments of the present application, "at least one (item)" means one or more, "a plurality of" means two or more, and "and/or" is used to describe the association relationship of associated objects, indicating that three relationships may exist. For example, "A and/or B" may indicate: only A exists, only B exists, and both A and B exist simultaneously, where A and B may be singular or plural. The character "/" generally indicates that the associated objects before and after are in an "or" relationship. "At least one of the following" or similar expressions thereof refer to any combination of these items, including any combination of a single item or a plurality of items. For example, at least one of a, b, or c may represent: a, b, c, "a and b", "a and c", "b and c", or "a and b and c", where a, b, and c may be single or a plurality of.

In the embodiments of the present application, words such as "exemplarily" or "for example" are used to indicate being used as an example, illustration, or explanation. Any embodiment or design described as "exemplarily" or "for example" in the embodiments of the present application shall not be construed as being more preferred or more advantageous than other embodiments or designs. Specifically, the use of words such as "exemplarily" or "for example" is intended to present related concepts in a concrete manner to facilitate understanding.

In the above embodiments, it may be implemented in whole or in part by software, hardware, firmware, or any combination thereof. When implemented using software, it may be implemented in whole or in part in the form of a computer program product. The computer program product includes one or more computer instructions. When the computer instructions are loaded and executed on a computer, the processes or functions according to the embodiments of the present application are generated in whole or in part. The computer may be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center through a wired (for example, coaxial cable, optical fiber, digital subscriber line (DSL)) or wireless (for example, infrared, wireless, microwave, etc.) manner. The computer-readable storage medium may be any available medium that a computer can access or a data storage device such as a server, a data center, etc. that integrates one or more available media. The available medium may be a magnetic medium (for example, a floppy disk, a hard disk, a magnetic tape), an optical medium (for example, a digital video disc (DVD)), or a semiconductor medium (for example, an SSD), etc.

The foregoing descriptions are merely specific implementations of the present application, but the protection scope of the present application is not limited thereto. Any person skilled in the art who, within the technical scope disclosed by the present application, can readily conceive of variations or replacements shall be covered within the protection scope of the present application. Therefore, the protection scope of the present application shall be subject to the protection scope of the claims.

## Claims

1. A communication method, comprising:
receiving configuration information, wherein the configuration information being used to configure a resource block bundling size corresponding to each second frequency domain resource of a plurality of second frequency domain resources of a first frequency domain resource, wherein resource blocks between different second frequency domain resources among the plurality of second frequency domain resources are non-contiguous and the resource blocks of each second frequency domain resource are contiguous;
determining, based on the resource block bundling size corresponding to each second frequency domain resource, a resource group corresponding to each second frequency domain resource.

2. The method according to claim 1, wherein that,
the first frequency domain resource is a bandwidth part (BWP), the second frequency domain resource is a carrier, the resource block is a physical resource block (PRB), the resource block bundling size is a physical resource block (PRB) bundling size, and the resource group is a physical resource block group (PRG).

3. The method according to claim 1 or 2, wherein that the resource block bundling size corresponding to each second frequency domain resource is the same, the resource group corresponding to each second frequency domain resource comprises M resource blocks, the M resource blocks are resource blocks occupied by the second frequency domain resource, and M is a positive integer.

4. The method according to claim 1 or 2, wherein that the resource block bundling size corresponding to each second frequency domain resource is the same, and for the n-th second frequency domain resource among the plurality of second frequency domain resources:
the size of the first resource group of the n-th second frequency domain resource is *P'* - *N^{start,n} modP*';
if (*N^{start,n}* + *N^{size,n}*) *mod P'* ≠ 0, the size of the last resource group of the n-th second frequency domain resource is (*N^{start,n}* + *N^{size,n}*) *mod P'*;
if (*N^{start,n}* + *N^{size,n}*) *mod P'* = 0, the size of the last resource group of the n-th second frequency domain resource is *P'*;
wherein *N^{start,n}* is the starting index of resource blocks in the n-th second frequency domain resource, *N^{size,n}* is the number of resource blocks comprised in the n-th second frequency domain resource, *P'* is the resource block bundling size corresponding to the plurality of second frequency domain resources, *mod* is a modulo function, and *P'* and n are positive integers.

5. The method according to claim 4, wherein that *P'* is determined based on one of: the sum of bandwidths of the plurality of second frequency domain resources, the maximum frequency domain interval among the plurality of second frequency domain resources, or the minimum frequency domain interval among the plurality of second frequency domain resources.

6. The method according to claim 1 or 2, wherein that the resource block bundling size corresponding to each second frequency domain resource is not the same, the resource group corresponding to the n-th second frequency domain resource among the plurality of second frequency domain resources comprises M resource blocks, the M resource blocks are resource blocks occupied by the n-th second frequency domain resource, and M and n are positive integers.

7. The method according to claim 1 or 2, wherein that the resource block bundling size corresponding to each second frequency domain resource is not the same, and for the n-th second frequency domain resource among the plurality of second frequency domain resources:
the size of the first resource group of the n-th second frequency domain resource is ${P}_{n}^{′} - {N}^{start , n} {modP}_{n}^{′}$ ;
if $\left({N}^{start , n}+{N}^{size , n}\right) {modP}_{n}^{′} \neq 0$, the size of the last resource group of the n-th second frequency domain resource is $\left({N}^{start , n}+{N}^{size , n}\right) {modP}_{n}^{′}$;
if $\left({N}^{start , n}+{N}^{size , n}\right) {modP}_{n}^{′} = 0$, the size of the last resource group of the n-th second frequency domain resource is ${P}_{n}^{′}$;
wherein *N^{start,n}* is the starting index of resource blocks in the n-th second frequency domain resource, *N^{size,n}* is the number of resource blocks comprised in the n-th second frequency domain resource, ${P}_{n}^{′}$ is the resource block bundling size corresponding to the n-th second frequency domain resource, *mod* is a modulo function, and ${P}_{n}^{′}$ and n are positive integers.

8. The method according to claim 7, wherein that ${P}_{n}^{′}$ is determined based on the bandwidth or frequency domain interval of the n-th second frequency domain resource.

9. The method according to any one of claims 1 to 8, wherein that precoding matrices adopted between different resource groups are not the same.

10. A communication method, comprising:
sending first configuration information, the configuration information being used to configure a resource block bundling size corresponding to each second frequency domain resource of a plurality of second frequency domain resources of a first frequency domain resource, wherein resource blocks between different second frequency domain resources among the plurality of second frequency domain resources are non-contiguous and the resource blocks of each second frequency domain resource are contiguous;
the resource block bundling size corresponding to each second frequency domain resource is used to determine the resource group corresponding to the second frequency domain resource.

11. The method according to claim 10, wherein that, the first frequency domain resource is a bandwidth part (BWP), the second frequency domain resource is a carrier, the resource block is a physical resource block (PRB), the resource block bundling size is a physical resource block (PRB) bundling size, and the resource group is a physical resource block group (PRG).

12. The method according to claim 10 or 11, wherein that the resource block bundling size corresponding to each second frequency domain resource is the same, the resource group corresponding to each second frequency domain resource comprises M resource blocks, the M resource blocks are resource blocks occupied by the second frequency domain resource, and M is a positive integer.

13. The method according to claim 10 or 11, wherein that the resource block bundling size corresponding to each second frequency domain resource is the same, and for the n-th second frequency domain resource among the plurality of second frequency domain resources:
the size of the first resource group of the n-th second frequency domain resource is *P'* - *N^{start,n} modP*':
if (*N^{start,n}* + *N^{size,n}*) *mod P'* ≠ 0, the size of the last resource group of the n-th second frequency domain resource is (*N^{start,n}* + *N^{size,n}*) *mod P'*;
if (*N^{start,n}* + *N^{size,n}*) *mod P'* = 0, the size of the last resource group of the n-th second frequency domain resource is *P'*;
wherein *N^{start,n}* is the starting index of resource blocks in the n-th second frequency domain resource, *N^{size,n}* is the number of resource blocks comprised in the n-th second frequency domain resource, *P'* is the resource block bundling size corresponding to the plurality of second frequency domain resources, *mod* is a modulo function, and *P'* and n are positive integers.

14. The method according to claim 13, wherein that *P'* is determined based on one of: the sum of bandwidths of the plurality of second frequency domain resources, the maximum frequency domain interval among the plurality of second frequency domain resources, or the minimum frequency domain interval among the plurality of second frequency domain resources.

15. The method according to claim 10 or 11, wherein that the resource block bundling size corresponding to each second frequency domain resource is not the same, the resource group corresponding to the n-th second frequency domain resource among the plurality of second frequency domain resources comprises M resource blocks, the M resource blocks are resource blocks occupied by the n-th second frequency domain resource, and M and n are positive integers.

16. The method according to claim 10 or 11, wherein that the resource block bundling size corresponding to each second frequency domain resource is not the same, and for the n-th second frequency domain resource among the plurality of second frequency domain resources:
the size of the first resource group of the n-th second frequency domain resource is ${P}_{n}^{′} - {N}^{start , n} {modP}_{n}^{′}$ ;
if $\left({N}^{start , n}+{N}^{size , n}\right) {modP}_{n}^{′} \neq 0$, the size of the last resource group of the n-th second frequency domain resource is $\left({N}^{start , n}+{N}^{size , n}\right) {modP}_{n}^{′}$;
if $\left({N}^{start , n}+{N}^{size , n}\right) {modP}_{n}^{′} = 0$, the size of the last resource group of the n-th second frequency domain resource is ${P}_{n}^{′}$;
wherein *N^{start,n}* is the starting index of resource blocks in the n-th second frequency domain resource, *N^{size,n}* is the number of resource blocks comprised in the n-th second frequency domain resource, ${P}_{n}^{′}$ is the resource block bundling size corresponding to the n-th second frequency domain resource, *mod* is a modulo function, and ${P}_{n}^{′}$ and n are positive integers.

17. The method according to claim 16, wherein that ${P}_{n}^{′}$ is determined based on the bandwidth or frequency domain interval of the n-th second frequency domain resource.

18. The method according to any one of claims 10 to 17, wherein that precoding matrices adopted between different resource groups are not the same.

19. A communication apparatus, wherein that the communication apparatus comprises a module for performing the method according to any one of claims 1 to 9, or comprises a module for performing the method according to any one of claims 10 to 18.

20. A communication apparatus, wherein that the communication apparatus comprises a processor, the processor being configured to perform the method according to any one of claims 1 to 9, or being configured to perform the method according to any one of claims 10 to 18.

21. A communication system, comprising: an apparatus for performing the method according to any one of claims 1 to 9, and an apparatus for performing the method according to any one of claims 10 to 18.

22. A computer-readable storage medium, wherein that the computer-readable storage medium is used to store instructions, which, when run on a computer, cause the method according to any one of claims 1 to 9 to be performed, or cause the method according to any one of claims 10 to 18 to be performed.

23. A computer program product comprising instructions, wherein that when the computer program product is run on a computer, the method according to any one of claims 1 to 9 is performed, or the method according to any one of claims 10 to 18 is performed.
